# EUROPEAN PATENT APPLICATION

(11) **EP 3 720 070 A1**
(43) Date of publication of application: **07.10.2020**
(21) Application number: 18879057.0
(22) Date of filing: 28.10.2018
(51) Int. Cl.: H04L 12/823, H04W 24/02

(54) **DATA PACKET PROCESSING METHOD AND DEVICE**

(30) Priority: 16.11.2017 CN 201711136518
(71) Applicant: Huawei Technologies Co., Ltd., Longgang District Shenzhen, Guangdong 518129 (CN)
(72) Inventor: YAO, Chuting, Shenzhen Guangdong 518129 (CN); XU, Haibo, Shenzhen Guangdong 518129 (CN); XU, Bin, Shenzhen Guangdong 518129 (CN); KUANG, Yiru, Shenzhen Guangdong 518129 (CN); WANG, Jian, Shenzhen Guangdong 518129 (CN); GUO, Yinghao, Shenzhen Guangdong 518129 (CN)
(74) Representative: Thun, Clemens
(86) International application number: PCT/CN2018/112278
(87) International publication number: WO 2019/095975

(57) **Abstract**

This application provides a data packet processing method and device. The method includes: during re-establishment of a packet data convergence protocol PDCP entity or data recovery, if a first timer is running, stopping and resetting, by a receiving device, the first timer, where the first timer is used to detect a loss of a received data packet or is used to detect whether a received data packet is out of order; and setting, by the receiving device, a value of a first variable to a value of a second variable, where the first variable indicates a count value of a next data packet that the receiving device expects to receive, and the second variable indicates a count value of a data packet that is still waiting and is the first data packet that is not delivered to an upper layer. The data packet processing method provided in this application can resolve a problem that a packet loss may occur after PDCP re-establishment or data recovery because a reordering timer is started prematurely, thereby improving data transmission accuracy and data transmission efficiency, and improving user experience.

## Description

### TECHNICAL FIELD

This application relates to the communications field, and more specifically, to a data packet processing method and device.

### BACKGROUND

During air interface transmission, data packets are sent in order on an air interface at a transmit end. However, because a plurality of hybrid automatic repeat request (Hybrid Automatic Repeat request, HARQ) processes run concurrently, the data packets are likely to be received at a receive end in disorder. Radio link control (Radio Link Control, RLC) in a layer 2 protocol stack in a long term evolution (Long Term Evolution, LTE) system is responsible for reordering received out-of-order data packets and delivering the data packets to a packet data convergence protocol (Packet Data Convergence Protocol, PDCP) layer at an upper layer. In 5th generation (the 5th Generation, 5G) new radio (New Radio, NR), the RLC layer in the layer 2 protocol stack does not have a reordering function, and the PDCP layer in the layer 2 protocol stack is responsible for reordering received out-of-order data packets.

A data radio bearer (Data Radio Bearer, DRB) in an acknowledged mode (Acknowledge Mode, AM) needs to ensure that no packet is lost during PDCP re-establishment or data recovery. Because in-order delivery needs to be ensured, a currently received out-of-order data packet and a number of the data packet are reserved during re-establishment. During NR PDCP re-establishment, a packet loss may occur. Consequently, data transmission accuracy is severely affected, data transmission efficiency is reduced, and user experience is poor.

### SUMMARY

This application provides a data packet processing method and device, to resolve a problem that a packet loss may occur after PDCP re-establishment or data recovery because a reordering timer is started prematurely, thereby improving data transmission accuracy and data transmission efficiency, and improving user experience.

According to a first aspect, a data packet processing method is provided, and includes: during re-establishment of a packet data convergence protocol PDCP entity or data recovery, stopping and resetting, by a receiving device, a first timer, or only stopping the first timer, where the first timer is used to detect a loss of a received data packet or is used to detect whether a received data packet is out of order; and setting, by the receiving device, a value of a first variable to a value of a second variable, where the first variable indicates a count value of a next data packet that the receiving device expects to receive, and the second variable indicates a count value of a data packet that is still waiting and is the first data packet that is not delivered to an upper layer.

According to the data packet processing method provided in the first aspect, during re-establishment of the PDCP entity or data recovery, if the first timer is running, the first timer is stopped and reset (or reset to 0) or the first timer is stopped only, and the value of the first variable is set to the value of the second variable. Alternatively, during re-establishment of the PDCP entity or data recovery, if the first timer is running, the first timer is stopped and reset or the first timer is stopped only, and the value of the first variable is set to the value of the second variable during re-establishment of the PDCP entity or data recovery. In this way, after the re-establishment or data recovery, a time of starting the first timer is delayed. This prevents a packet loss caused by premature start of the first timer, and prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

In a possible implementation of the first aspect, the method further includes: receiving, by the receiving device, a data packet; and when a value of a third variable is greater than or equal to the value of the first variable, updating, by the receiving device, the value of the first variable to a value of a fourth variable, where the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity. In this implementation, the value of the first variable may be updated based on a situation of a data packet actually received by the receiving device. Therefore, the first variable can better conform to a physical definition of the first variable. To be specific, the first variable is updated to the count value of the next data packet that the receiving device expects to receive. In addition, accuracy and efficiency of data packet transmission and delivery are improved, and user experience is improved.

In a possible implementation of the first aspect, the method further includes: during re-establishment of the PDCP entity or data recovery, setting, by the receiving device, a value of a fifth variable to the value of the second variable that is obtained when the first timer is stopped and reset, or setting a value of a fifth variable to the value of the second variable that is obtained when the first timer is stopped, or setting a value of a fifth variable to the value of the first variable that is obtained when the first timer is stopped and reset, or setting a value of a fifth variable to the value of the first variable that is obtained when the first timer is stopped, or setting a value of a fifth variable to an initial value of the fifth variable, or setting a value of a fifth variable to be unchanged, where the fifth variable indicates a count value of a data packet that is obtained when the first timer is triggered to be started.

In a possible implementation of the first aspect, the method further includes: if the receiving device is configured by the upper layer to send a PDCP status report, generating the PDCP status report before the receiving device sets the value of the first variable to the value of the second variable; or if the receiving device is configured by the upper layer to send a PDCP status report, generating the PDCP status report based on a value of the first variable and a value of the second variable that are obtained before re-establishment of the PDCP entity or data recovery.

In a possible implementation of the first aspect, the method further includes: if the receiving device is configured by the upper layer to send a PDCP status report, generating a bit map in the PDCP status report before the receiving device sets the value of the first variable to the value of the second variable; or if the receiving device is configured by the upper layer to send a PDCP status report, generating a bit map in the PDCP status report based on a value of the first variable and a value of the second variable that are obtained before re-establishment of the PDCP entity or data recovery.

In a possible implementation of the first aspect, the method further includes: when the first timer is not running, and the value of the second variable is less than the value of the first variable, starting, by the receiving device, the first timer.

In a possible implementation of the first aspect, the method further includes: when the first timer is not running, and the value of the second variable is less than the value of the first variable, updating, by the receiving device, a value of a fifth variable to the value of the first variable, where the fifth variable indicates a count value of a data packet that is obtained when the first timer is triggered to be started.

In a possible implementation of the first aspect, the first timer is a reordering timer.

In a possible implementation of the first aspect, the method further includes: when the first timer expires, delivering, by the receiving device, the data packet.

In a possible implementation of the first aspect, the method further includes: when the value of the third variable is equal to the value of the second variable, delivering, by the receiving device, the data packet.

In a possible implementation of the first aspect, the receiving, by the receiving device, a data packet includes: receiving, by the packet data convergence protocol PDCP entity of the receiving device, the data packet.

In a possible implementation of the first aspect, the first variable is RX NEXT, the second variable is RX_DELIV, the third variable is RCVD_COUNT, the fifth variable is RX_REORD, and the first timer is t-Reordering.

According to a second aspect, a data packet processing method is provided, and includes: receiving, by a receiving device, a data packet; and when a value of a third variable is greater than or equal to a value of a first variable, updating, by the receiving device, the value of the first variable to a value of a fourth variable, where the first variable indicates a count value of a next data packet that the receiving device expects to receive, the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the receiving device.

According to the data packet processing method provided in the second aspect, the value of the first variable may be updated based on a situation of a data packet actually received by the receiving device. Therefore, the first variable can better conform to a physical definition of the first variable. To be specific, the first variable is updated to the count value of the next data packet that the receiving device expects to receive. In addition, accuracy and efficiency of data packet transmission and delivery are improved, and user experience is improved.

In a possible implementation of the second aspect, the method further includes: during re-establishment of a packet data convergence protocol PDCP entity or data recovery, if a first timer is running, stopping and resetting, by the receiving device, the first timer, or only stopping the first timer, where the first timer is used to detect a loss of a received data packet or is used to detect whether a received data packet is out of order.

In a possible implementation of the second aspect, the method further includes: during re-establishment of the packet data convergence protocol PDCP entity or data recovery, setting, by the receiving device, the value of the first variable to a value of a second variable, where the second variable indicates a count value of a data packet that is still waiting and is the first data packet that is not delivered to an upper layer.

In a possible implementation of the second aspect, the method further includes: if the receiving device is configured by the upper layer to send a PDCP status report, generating the PDCP status report before the receiving device sets the value of the first variable to the value of the second variable; or if the receiving device is configured by the upper layer to send a PDCP status report, generating the PDCP status report based on a value of the first variable and a value of the second variable that are obtained before re-establishment of the PDCP entity or data recovery.

In a possible implementation of the second aspect, the method further includes: if the receiving device is configured by the upper layer to send a PDCP status report, generating a bit map in the PDCP status report before the receiving device sets the value of the first variable to the value of the second variable; or if the receiving device is configured by the upper layer to send a PDCP status report, generating a bit map in the PDCP status report based on a value of the first variable and a value of the second variable that are obtained before re-establishment of the PDCP entity or data recovery.

In a possible implementation of the second aspect, the method further includes: when the first timer is not running, and the value of the second variable is less than the value of the first variable, updating, by the receiving device, a value of a fifth variable to the value of the first variable, where the first timer is used to detect a loss of a received data packet or is used to detect whether a received data packet is out of order, the second variable indicates a count value of a data packet that is still waiting and is the first data packet that is not delivered to an upper layer, and the fifth variable indicates a count value of a data packet that is obtained when the first timer is triggered to be started.

In a possible implementation of the second aspect, the method further includes: when the first timer is not running, and the value of the second variable is less than the value of the first variable, starting, by the receiving device, the first timer, where the second variable indicates a count value of a data packet that is still waiting and is the first data packet that is not delivered to an upper layer.

In a possible implementation of the second aspect, the receiving, by a receiving device, a data packet includes: receiving, by a packet data convergence protocol PDCP entity of the receiving device, the data packet.

In a possible implementation of the second aspect, the first timer is a reordering timer.

In a possible implementation of the second aspect, the method further includes: when the first timer expires, delivering, by the receiving device, the data packet.

In a possible implementation of the second aspect, the method further includes: when the value of the third variable is equal to the value of the second variable, delivering, by the receiving device, the data packet.

In a possible implementation of the second aspect, the first variable is RX_NEXT, the second variable is RXDELIV, the third variable is RCVD_COUNT, the fifth variable is RX_REORD, and the first timer is t-Reordering.

According to a third aspect, a data packet processing method is provided, and includes: receiving, by a receiving device, a data packet; and starting, by the receiving device, a first timer in a case in which a value of a second variable is less than a value of a first variable, and the first timer is not running because of re-establishment of a packet data convergence protocol PDCP entity or data recovery; or starting, by the receiving device, a first timer in a case in which a value of a second variable is less than a value of a first variable, and the first timer is not running not because of re-establishment of a packet data convergence protocol PDCP entity or data recovery. The first timer is used to detect a loss of a received data packet or is used to detect whether a received data packet is out of order, the first variable indicates a count value of a next data packet that the receiving device expects to receive, and the second variable indicates a count value of a data packet that is still waiting and is the first data packet that is not delivered to an upper layer.

According to the data packet processing method provided in the third aspect, a start condition of the first timer is changed, so that a time of starting the first timer is delayed. This prevents a packet loss caused by premature start of the first timer, and can prevent a packet loss caused during re-establishment of the PDCP entity or data recovery, thereby improving data transmission accuracy and data transmission efficiency, and improving user experience.

In a possible implementation of the third aspect, the method further includes: during re-establishment of the PDCP entity or data recovery, if the first timer is running, stopping and resetting the first timer, or only stopping the first timer.

In a possible implementation of the third aspect, the method further includes: updating, by the receiving device, a value of a fifth variable to the value of the first variable, where the fifth variable indicates a count value of a data packet that is obtained when the first timer is triggered to be started.

In a possible implementation of the third aspect, the method further includes: when a value of a third variable is greater than or equal to the value of the first variable, updating, by the receiving device, the value of the first variable to a value of a fourth variable, where the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

In a possible implementation of the third aspect, the method further includes: during re-establishment of the PDCP entity or data recovery, updating, by the receiving device, a value of a fifth variable to the value of the second variable that is obtained when the first timer is stopped and reset, or updating a value of a fifth variable to the value of the second variable that is obtained when the first timer is stopped, or updating a value of a fifth variable to the value of the first variable that is obtained when the first timer is stopped and reset, or updating a value of a fifth variable to the value of the first variable that is obtained when the first timer is stopped, or updating a value of a fifth variable to an initial value of the fifth variable, or setting a value of a fifth variable to be unchanged, where the fifth variable indicates a count value of a data packet that is obtained when the first timer is triggered to be started.

In a possible implementation of the third aspect, the first timer is a reordering timer.

In a possible implementation of the third aspect, the method further includes: when the first timer expires, delivering, by the receiving device, the data packet.

In a possible implementation of the third aspect, the method further includes: when the value of the third variable is equal to the value of the second variable, delivering, by the receiving device, the data packet.

In a possible implementation of the third aspect, the receiving, by a receiving device, a data packet includes: receiving, by the packet data convergence protocol PDCP entity of the receiving device, the data packet.

In a possible implementation of the third aspect, the first variable is RX_NEXT, the second variable is RX_DELIV, the third variable is RCVD_COUNT, the fifth variable is RX_REORD, and the first timer is t-Reordering.

According to a fourth aspect, a data packet processing method is provided, and includes: receiving, by a receiving device, a data packet; and when a first timer is not running, a value of a second variable is less than a value of a first variable, and the value of the first variable is equal to a value of a third variable plus 1, starting, by the receiving device, the first timer, where the first variable indicates a count value of a next data packet that the receiving device expects to receive, the second variable indicates a count value of a data packet that is still waiting and is the first data packet that is not delivered to an upper layer, the third variable indicates a count value of the data packet received by the receiving device, and the first timer is used to detect a loss of a received data packet or is used to detect whether a received data packet is out of order.

According to the data packet processing method provided in the fourth aspect, after the receiving device receives the data packet, a start condition of the first timer is changed, so that a time of starting the first timer is delayed. This prevents a packet loss caused by premature start of the first timer, and can prevent a packet loss caused during re-establishment of the PDCP entity or data recovery, thereby improving data transmission accuracy and data transmission efficiency, and improving user experience.

In a possible implementation of the fourth aspect, the method further includes: during re-establishment of the PDCP entity or data recovery, if the first timer is running, stopping and resetting the first timer, or only stopping the first timer.

In a possible implementation of the fourth aspect, when the first timer is not running, the value of the second variable is less than the value of the first variable, and the value of the first variable is equal to the value of the third variable plus 1, the receiving device updates a value of a fifth variable to the value of the first variable, where the fifth variable indicates a count value of a data packet that is obtained when the first timer is triggered to be started.

In a possible implementation of the fourth aspect, the method further includes: when the first timer expires, delivering, by the receiving device, the data packet.

In a possible implementation of the fourth aspect, the method further includes: when the value of the third variable is equal to the value of the second variable, delivering, by the receiving device, the data packet.

In a possible implementation of the fourth aspect, the first timer is a reordering timer.

In a possible implementation of the fourth aspect, the receiving, by a receiving device, a data packet includes: receiving, by a packet data convergence protocol PDCP entity of the receiving device, the data packet.

In a possible implementation of the fourth aspect, the first variable is RX_NEXT, the second variable is RXDELIV, the third variable is RCVD_COUNT, the fifth variable is RX_REORD, and the first timer is t-Reordering.

According to a fifth aspect, a data packet processing method is provided, and includes: during re-establishment of a packet data convergence protocol PDCP entity or data recovery, stopping and resetting, by a receiving device, a first timer, or only stopping the first timer, where the first timer is used to detect a loss of a received data packet or is used to detect whether a received data packet is out of order; and setting, by the receiving device, a value of a sixth variable to a value of a second variable, where the sixth variable is used to indicate 1 plus a largest count value in count values of data packets received by the receiving device after re-establishment of the PDCP entity or data recovery, or the sixth variable is used to indicate a count value that is greater than a largest count value in count values of data packets received by the receiving device after re-establishment of the PDCP entity or data recovery and that is of the first data packet that is not delivered to an upper layer, and the second variable indicates a count value of a data packet that is still waiting and is the first data packet that is not delivered to the upper layer.

According to the data packet processing method provided in the fifth aspect, during re-establishment of the PDCP entity or data recovery, the first timer is stopped and reset (reset to 0) or the first timer is stopped only, a new variable (the sixth variable) is introduced, and the value of the sixth variable is set to the value of the second variable. After re-establishment of the PDCP entity or data recovery, the sixth variable is used to replace the first variable. To be specific, a data packet is delivered based on the sixth variable, the second variable, and the first timer. After the re-establishment or data recovery, the first timer is prevented from being started when no out-of-order packet is received, and a packet loss caused by premature start of the first timer is prevented. In addition, this prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

In a possible implementation of the fifth aspect, the method further includes: during re-establishment of the PDCP entity or data recovery, if the first timer is running, stopping and resetting the first timer, or only stopping the first timer.

In a possible implementation of the fifth aspect, the method further includes: during re-establishment of the PDCP entity or data recovery, setting the value of the sixth variable to the value of the second variable.

In a possible implementation of the fifth aspect, the method further includes: receiving, by the receiving device, a data packet; and when the value of the sixth variable is less than or equal to a value of a first variable or when the value of the sixth variable is less than or equal to a value of a first variable plus an offset value, and when a value of a third variable is greater than or equal to the value of the sixth variable, updating, by the receiving device, the value of the sixth variable to a value of a fourth variable, where the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity. In this implementation, after re-establishment of the PDCP entity or data recovery, when the value of the sixth variable is less than or equal to the value of the first variable or when the value of the sixth variable is less than or equal to the value of the first variable plus the offset value, the sixth variable is used to replace the first variable. To be specific, a data packet is delivered based on the sixth variable, the second variable, and the first timer. When the value of the sixth variable is greater than the value of the first variable or when the value of the sixth variable is greater than the value of the first variable plus the offset value, the receiving device continues to deliver the data packet by using the first variable, the second variable, and the first timer. After the re-establishment or data recovery, it is ensured that the first timer is not started when no out-of-order packet is received. This prevents a packet loss caused when the first timer expires after re-establishment of the PDCP entity or data recovery, thereby improving user experience.

In a possible implementation of the fifth aspect, the method further includes: receiving, by the receiving device, a data packet; and when the value of the sixth variable is greater than a value of a first variable or when the value of the sixth variable is greater than a value of a first variable plus an offset value, and when a value of a third variable is greater than or equal to the value of the first variable, updating, by the receiving device, the value of the first variable to a value of a fourth variable, where the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

In a possible implementation of the fifth aspect, the method further includes: during re-establishment of the PDCP entity or data recovery, setting, by the receiving device, a value of a fifth variable to the value of the second variable that is obtained when the first timer is stopped and reset, or setting a value of a fifth variable to the value of the second variable that is obtained when the first timer is stopped, or setting a value of a fifth variable to the value of the first variable that is obtained when the first timer is stopped and reset, or setting a value of a fifth variable to the value of the first variable that is obtained when the first timer is stopped, or setting a value of a fifth variable to the value of the sixth variable that is obtained when the first timer is stopped and reset, or setting a value of a fifth variable to the value of the sixth variable that is obtained when the first timer is stopped, or setting a value of a fifth variable to an initial value of the fifth variable, or setting a value of a fifth variable to be unchanged, where the fifth variable indicates a count value of a data packet that is obtained when the first timer is triggered to be started.

In a possible implementation of the fifth aspect, the method further includes: when the value of the sixth variable is less than or equal to the value of the first variable or the value of the sixth variable is less than or equal to the value of the first variable plus the offset value, and when the first timer is not running and the value of the second variable is less than the value of the sixth variable, starting, by the receiving device, the first timer.

In a possible implementation of the fifth aspect, the method further includes: when the value of the sixth variable is less than or equal to the value of the first variable or the value of the sixth variable is less than or equal to the value of the first variable plus the offset value, and when the first timer is not running and the value of the second variable is less than the value of the sixth variable, updating, by the receiving device, a value of a fifth variable to the value of the sixth variable, where the fifth variable indicates a count value of a data packet that is obtained when the first timer is triggered to be started.

In a possible implementation of the fifth aspect, the method further includes: when the first timer expires, delivering, by the receiving device, the data packet.

In a possible implementation of the fifth aspect, the method further includes: when the value of the third variable is equal to the value of the second variable, delivering, by the receiving device, the data packet.

In a possible implementation of the fifth aspect, the first timer is a reordering timer.

In a possible implementation of the fifth aspect, the receiving, by the receiving device, a data packet includes: receiving, by the packet data convergence protocol PDCP entity of the receiving device, the data packet.

In a possible implementation of the fifth aspect, the first variable is RX_NEXT, the second variable is RX_DELIV, the third variable is RCVD_COUNT, the fifth variable is RX_REORD, and the first timer is t-Reordering.

In a possible implementation of the fifth aspect, the offset value is 0 or a positive value.

According to a sixth aspect, a data packet processing method is provided, and includes: during re-establishment of a packet data convergence protocol PDCP entity or data recovery, if a first timer is running, stopping and resetting, by a receiving device, the first timer, or only stopping the first timer, where the first timer is used to detect a loss of a received data packet or is used to detect whether a received data packet is out of order.

According to the data packet processing method provided in the sixth aspect, during re-establishment of the PDCP entity or data recovery, if the first timer is running, the first timer is stopped and reset (or reset to 0), or the first timer is stopped only. This prevents a packet loss caused when the timer expires during the PDCP re-establishment, thereby improving data transmission accuracy and data transmission efficiency, and improving user experience.

In a possible implementation of the sixth aspect, the method further includes: setting, by the receiving device, a value of a first variable to a value of a second variable, where the first variable indicates a count value or a sequence number of a next data packet that the receiving device expects to receive, and the second variable indicates a count value or a sequence number of a data packet that is still waiting and is the first data packet that is not delivered to an upper layer, or the second variable indicates 1 plus a count value or a sequence number of the latest data packet that is delivered to an upper layer.

In a possible implementation of the sixth aspect, before re-establishment of the PDCP entity or data recovery, the PDCP entity has a reordering function. In addition, after re-establishment of the PDCP entity or data recovery, when the PDCP is connected to two radio link control RLC entities in an acknowledged mode AM, the terminal device stops and resets the first timer, or only stops the first timer.

In a possible implementation of the sixth aspect, the first timer is a reordering timer.

According to a seventh aspect, a receiving device is provided. The receiving device includes a processor, a memory, and a transceiver that are configured to support the receiving device in performing corresponding functions in the foregoing method. The processor, the memory, and the transceiver are connected through communication. The memory stores an instruction. The transceiver is configured to send or receive a specific signal when the transceiver is driven by the processor. The processor is configured to invoke the instruction to implement the data packet processing method in the first aspect and the various implementations of the first aspect.

According to an eighth aspect, a receiving device is provided. The receiving device includes a processing module, a storage module, and a transceiver module that are configured to support the receiving device in performing functions of the receiving device in the first aspect or any possible implementation of the first aspect. The functions may be implemented by hardware, or may be implemented by hardware by executing corresponding software. The hardware or the software includes one or more modules corresponding to the foregoing functions.

According to a ninth aspect, a receiving device is provided. The receiving device includes a processor, a memory, and a transceiver that are configured to support the receiving device in performing corresponding functions in the foregoing method. The processor, the memory, and the transceiver are connected through communication. The memory stores an instruction. The transceiver is configured to send or receive a specific signal when the transceiver is driven by the processor. The processor is configured to invoke the instruction to implement the data packet processing method in the second aspect and the various implementations of the second aspect.

According to a tenth aspect, a receiving device is provided. The receiving device includes a processing module, a storage module, and a transceiver module that are configured to support the receiving device in performing functions of the receiving device in the second aspect or any possible implementation of the second aspect. The functions may be implemented by hardware, or may be implemented by hardware by executing corresponding software. The hardware or the software includes one or more modules corresponding to the foregoing functions.

According to an eleventh aspect, a receiving device is provided. The receiving device includes a processor, a memory, and a transceiver that are configured to support the receiving device in performing corresponding functions in the foregoing method. The processor, the memory, and the transceiver are connected through communication. The memory stores an instruction. The transceiver is configured to send or receive a specific signal when the transceiver is driven by the processor. The processor is configured to invoke the instruction to implement the data packet processing method in the third aspect and the various implementations of the third aspect.

According to a twelfth aspect, a receiving device is provided. The receiving device includes a processing module, a storage module, and a transceiver module that are configured to support the receiving device in performing functions of the receiving device in the third aspect or any possible implementation of the third aspect. The functions may be implemented by hardware, or may be implemented by hardware executing corresponding software. The hardware or the software includes one or more modules corresponding to the foregoing functions.

According to a thirteenth aspect, a receiving device is provided. The receiving device includes a processor, a memory, and a transceiver that are configured to support the receiving device in performing corresponding functions in the foregoing method. The processor, the memory, and the transceiver are connected through communication. The memory stores an instruction. The transceiver is configured to send or receive a specific signal when the transceiver is driven by the processor. The processor is configured to invoke the instruction to implement the data packet processing method in the fourth aspect and the various implementations of the fourth aspect.

According to a fourteenth aspect, a receiving device is provided. The receiving device includes a processing module, a storage module, and a transceiver module that are configured to support the receiving device in performing functions of the receiving device in the fourth aspect or any possible implementation of the fourth aspect. The functions may be implemented by hardware, or may be implemented by hardware executing corresponding software. The hardware or the software includes one or more modules corresponding to the foregoing functions.

According to a fifteenth aspect, a receiving device is provided. The receiving device includes a processor, a memory, and a transceiver that are configured to support the receiving device in performing corresponding functions in the foregoing method. The processor, the memory, and the transceiver are connected through communication. The memory stores an instruction. The transceiver is configured to send or receive a specific signal when the transceiver is driven by the processor. The processor is configured to invoke the instruction to implement the data packet processing method in the fifth aspect and the various implementations of the fifth aspect.

According to a sixteenth aspect, a receiving device is provided. The receiving device includes a processing module, a storage module, and a transceiver module that are configured to support the receiving device in performing functions of the receiving device in the fifth aspect or any possible implementation of the fifth aspect. The functions may be implemented by hardware, or may be implemented by hardware by executing corresponding software. The hardware or the software includes one or more modules corresponding to the foregoing functions.

According to a seventeenth aspect, a receiving device is provided. The receiving device includes a processor, a memory, and a transceiver that are configured to support the receiving device in performing corresponding functions in the foregoing method. The processor, the memory, and the transceiver are connected through communication. The memory stores an instruction. The transceiver is configured to send or receive a specific signal when the transceiver is driven by the processor. The processor is configured to invoke the instruction to implement the data packet processing method in the sixth aspect and the various implementations of the sixth aspect.

According to an eighteenth aspect, a receiving device is provided. The receiving device includes a processing module, a storage module, and a transceiver module that are configured to support the receiving device in performing functions of the receiving device in the sixth aspect or any possible implementation of the sixth aspect. The functions may be implemented by hardware, or may be implemented by hardware executing corresponding software. The hardware or the software includes one or more modules corresponding to the foregoing functions.

According to a nineteenth aspect, a computer-readable storage medium is provided. The computer-readable storage medium is configured to store a computer program. The computer program includes an instruction used to perform the methods in the first aspect to the sixth aspect or any possible implementation of the first aspect to the sixth aspect.

According to a twentieth aspect, a system chip is provided. The system chip includes a processing unit and a communications unit. The processing unit can execute a computer instruction, to enable a chip in a terminal to perform the methods in the first aspect to the sixth aspect or any possible implementation of the first aspect to the sixth aspect.

### BRIEF DESCRIPTION OF DRAWINGS

FIG. 1 is a schematic diagram of a communications system to which a data packet processing method of this application is applicable;
FIG. 2 is a schematic structural diagram of a count value (COUNT) structure of a data packet;
FIG. 3A and FIG. 3B are a schematic diagram of a process of delivering a data packet and updating each variable;
FIG. 4 is a schematic diagram of a data packet received before PDCP re-establishment according to an embodiment of this application;
FIG. 5 is a schematic flowchart of a data packet processing method according to an embodiment of this application;
FIG. 6 is a schematic flowchart of a data packet processing method according to another embodiment of this application;
FIG. 7 is a schematic flowchart of a data packet processing method according to an embodiment of this application;
FIG. 8 is a schematic flowchart of a data packet processing method according to another embodiment of this application;
FIG. 9 is a schematic flowchart of a data packet processing method according to an embodiment of this application;
FIG. 10 is a schematic flowchart of a data packet processing method according to another embodiment of this application;
FIG. 11 is a schematic flowchart of a data packet processing method according to an embodiment of this application;
FIG. 12 is a schematic flowchart of a data packet processing method according to another embodiment of this application;
FIG. 13 is a schematic flowchart of a data packet processing method according to still another embodiment of this application;
FIG. 14 is a schematic flowchart of a data packet processing method according to still another embodiment of this application;
FIG. 15 is a schematic block diagram of a receiving device according to another embodiment of this application;
FIG. 16 is a schematic block diagram of a receiving device according to an embodiment of this application;
FIG. 17 is a schematic block diagram of a receiving device according to another embodiment of this application;
FIG. 18 is a schematic block diagram of a receiving device according to an embodiment of this application;
FIG. 19 is a schematic block diagram of a receiving device according to another embodiment of this application;
FIG. 20 is a schematic block diagram of a receiving device according to an embodiment of this application;
FIG. 21 is a schematic block diagram of a receiving device according to another embodiment of this application;
FIG. 22 is a schematic block diagram of a receiving device according to an embodiment of this application;
FIG. 23 is a schematic block diagram of a receiving device according to another embodiment of this application;
FIG. 24 is a schematic block diagram of a receiving device according to an embodiment of this application;
FIG. 25 is a schematic block diagram of a receiving device according to another embodiment of this application; and
FIG. 26 is a schematic block diagram of a receiving device according to another embodiment of this application;

### DESCRIPTION OF EMBODIMENTS

The following describes technical solutions of this application with reference to accompanying drawings.

The technical solutions in the embodiments of this application may be applied to various communications systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunication System, UMTS), a worldwide interoperability for microwave access (Worldwide Interoperability for Microwave Access, WiMAX) communications system, and a future 5th generation (5th Generation, 5G) system or a new radio (New Radio, NR) system.

A receiving device in the embodiments of this application may be a terminal device. The terminal device may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a future 5G network, a terminal device in a future evolved public land mobile network (Public Land Mobile Network, PLMN), or the like. This is not limited in the embodiments of this application.

The receiving device in the embodiments of this application may alternatively be a network device. The network device may be a device configured to communicate with a terminal device. The network device may be a base transceiver station (Base Transceiver Station, BTS) in a global system for mobile communications (Global System of Mobile communication, GSM) or code division multiple access (Code Division Multiple Access, CDMA), or may be a NodeB (NodeB, NB) in a wideband code division multiple access (Wideband Code Division Multiple Access, WCDMA) system, or may be an evolved NodeB (Evolutional NodeB, eNB or eNodeB) in an LTE system, or may be a radio controller in a cloud radio access network (Cloud Radio Access Network, CRAN) scenario. Alternatively, the network device may be a relay station, an access point, a vehicle-mounted device, a wearable device, a network device in a future 5G network, a network device in a future evolved PLMN network, or the like. This is not limited in the embodiments of this application.

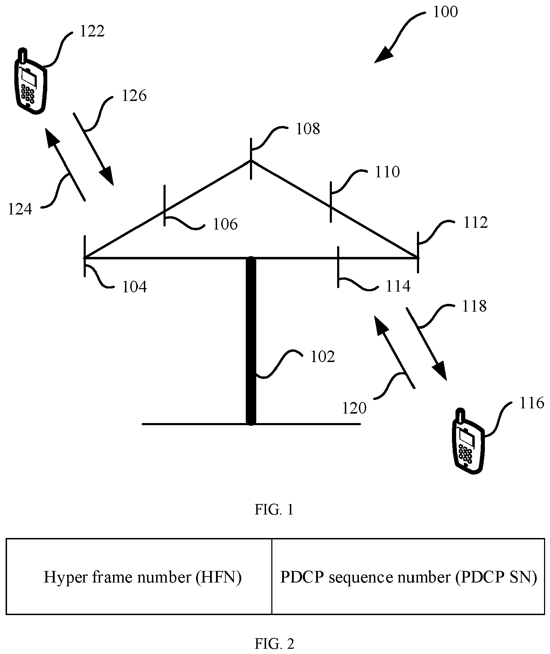

FIG. 1 is a schematic diagram of a communications system to which a data packet delivering method of this application is applicable. As shown in FIG. 1, the communications system 100 includes a network device 102. The network device 102 may include a plurality of antennas, for example, antennas 104, 106, 108, 110, 112, and 114. The network device 102 may additionally include a transmitter chain and a receiver chain. A person of ordinary skill in the art may understand that the transmitter chain and the receiver chain each may include a plurality of components (for example, a processor, a modulator, a multiplexer, an encoder, a demultiplexer, or an antenna) related to signal sending and receiving.

The network device 102 may communicate with a plurality of terminal devices (for example, a terminal device 116 and a terminal device 122). However, it can be understood that the network device 102 may communicate with any quantity of terminal devices that are similar to the terminal device 116 or the terminal device 122. The terminal devices 116 or the terminal device 122 may be, for example, a cellular phone, a smartphone, a portable computer, a handheld communications device, a handheld computing device, a satellite radio apparatus, a global positioning system, a PDA, and/or any other proper device used for communication in the wireless communications system 100.

As shown in FIG. 1, the terminal device 116 communicates with the antenna 112 and the antenna 114. The antenna 112 and the antenna 114 send information to the terminal device 116 over a forward link 118, and receive information from the terminal device 116 over a reverse link 120. In addition, the terminal device 122 communicates with the antenna 104 and the antenna 106. The antenna 104 and the antenna 106 send information to the terminal device 122 over a forward link 124, and receive information from the terminal device 122 over a reverse link 126.

For example, in an FDD system, the forward link 118 may use a frequency band different from that used by the reverse link 120, and the forward link 124 may use a frequency band different from that used by the reverse link 126.

For another example, in a TDD system and a full duplex (full duplex) system, the forward link 118 and the reverse link 120 may use a same frequency band, and the forward link 124 and the reverse link 126 may use a same frequency band.

Each antenna (or an antenna group including a plurality of antennas) and/or an area designed for communication are/is referred to as a sector of the network device 102. For example, the antenna group may be designed to communicate with a terminal device in the sector within coverage of the network device 102. In a process in which the network device 102 respectively communicates with the terminal device 116 and the terminal device 122 over the forward link 118 and the forward link 124, a transmit antenna of the network device 102 may improve signal-to-noise ratios of the forward link 118 and the forward link 124 through beamforming. In addition, compared with a manner in which the network device sends a signal to all terminal devices of the network device by using a single antenna, in a manner in which the network device 102 sends, through beamforming, a signal to the terminal device 116 and the terminal device 122 that are randomly scattered within related coverage, a mobile device in a neighboring cell is less interfered with.

In a given time, the network device 102, the terminal device 116, or the terminal device 122 may be a wireless communications sending apparatus and/or a wireless communications receiving apparatus. When sending data, the wireless communications sending apparatus may code the data for transmission. Specifically, the wireless communications sending apparatus may obtain a specific quantity of data bits (for example, generate the specific quantity of data bits, receive the specific quantity of data bits from another communications apparatus, or store the specific quantity of data bits in a memory) that are to be sent to the wireless communications receiving apparatus through a channel. The data bits may be included in a transport block (or a plurality of transport blocks) of the data, and the transport block may be segmented into a plurality of code blocks.

In addition, the communications system 100 may be a PLMN network, a device-to-device (device-to-device, D2D) network, a machine-to-machine (machine to machine, M2M) network, or another network. FIG. 1 is merely a simplified schematic diagram of an example. The network may further include another network device, which is not shown in FIG. 1.

During air interface transmission, data packets (service data units) are sent in order on an air interface at a transmit end (a sending device). However, because a plurality of HARQ processes run concurrently, the data packets are likely to be received at a receive end (a receiving device) in disorder. A sequence number (Sequence Number, SN) is added to a data packet at a PDCP layer of the transmit end, and a PDCP receiving entity performs reordering and repeated detection by using the SN, to ensure in-order delivery and detect repeated packets. The transmit end and the receive end further need to maintain a same hyper frame number (Hyper Frame Number, HFN). The HFN is used to limit a quantity of bits of a sequence number transmitted on an air interface. A sum of an SN and an HFN is a count value (COUNT) of a data packet. Each data packet has a count value. The air interface at the transmit end (the sending device) sends data packets in ascending order of count values of the data packets. The transmit end needs to maintain that a quantity of to-be-sent SNs is not greater than a half of a total quantity of SNs, so as to avoid frame number disorder. Similarly, the receive end also uses a length of a half of a quantity of SNs as a receive window. Data packets received by the receive end may also be out of order. However, the received data packets are delivered to an upper layer in an order of count values.

FIG. 2 is a schematic structural diagram of a count value (COUNT) structure of a data packet. It can be learned from FIG. 2 that a count value of a data packet includes an SN field and an HFN field. A sum of a quantity of bits (bit) of the HFN field and a quantity of bits (bit) of the SN field is 32 bits. In other words, a count field in the data packet is 32 bits.

In 5G NR, a PDCP entity of a receiving device reorders received data packets based on count values of the data packets (service data units). An ordering and delivering process is as follows:

After a data packet is received, a currently received count value (received count, RCVD_COUNT) is first deduced based on an SN number and a current HFN of the data packet.

It is determined whether the count value of the received data packet is within a valid receive window, to be specific, whether the count value of the received data packet is greater than or equal to a next to-be-delivered count value (received deliver, RX_DELIV) and is less than a sum of RX_DELIV and a value that is obtained by dividing a total quantity of SNs by 2. If the count value of the received data packet is not within the valid receive window, the received data packet is discarded. If the count value of the received data packet is within the valid receive window, the valid data packet is stored at a PDCP layer and then delivered in order.

There are four variables during sorting:

RCVD_COUNT indicates a count value of a currently received service data unit (Service Data Unit, SDU) or protocol data unit (Protocol Data Unit, PDU).

RX_DELIV indicates a count value of an SDU or a PDU that is still waiting and is the first SDU or PDU that is not delivered to an upper layer.

RX_NEXT (receive next, RX NEXT) indicates a count value (a currently received largest count value plus 1) of a next PDCP SDU or PDU that is expected to be received.

RX_REORD (receive reorder, RX_REORD) indicates a value of RX_NEXT that is obtained when a reordering timer (t-reordering) is started. The reordering timer is used when an RLC entity detects, in an AM on a receive side, whether an RLC protocol data unit (Protocol Data Unit, PDU) or a data packet transmitted by a lower layer is lost.

A specific delivering process and a specific variable updating process are as follows:

If RCVD_COUNT of a currently received SDU is greater than or equal to RX_NEXT, a value of RX_NEXT is updated to RCVD_COUNT plus 1.

If out-of-order delivery (out of order delivery) is configured, an SDU that has been stored at the PDCP layer is delivered to the upper layer.

If RCVD_COUNT of the currently received SDU is equal to RX_DELIV, related data packets are delivered in ascending order. To be specific, all consecutive SDUs starting from RXDELIV that are in count values of all stored SDUs are delivered to the upper layer, and RX_DELIV is updated to a count of the first SDU that is not delivered. In addition, the count is greater than or equal to RX_DELIV.

If t-Reordering is running, and RX_DELIV ≥ RX_REORD, t-Reordering is stopped and reset.

If t-Reordering is not running (which includes stopping caused by the foregoing case), and RX_DELIV < RX NEXT, RX_REORD is updated to RX NEXT, and t-Reordering is started.

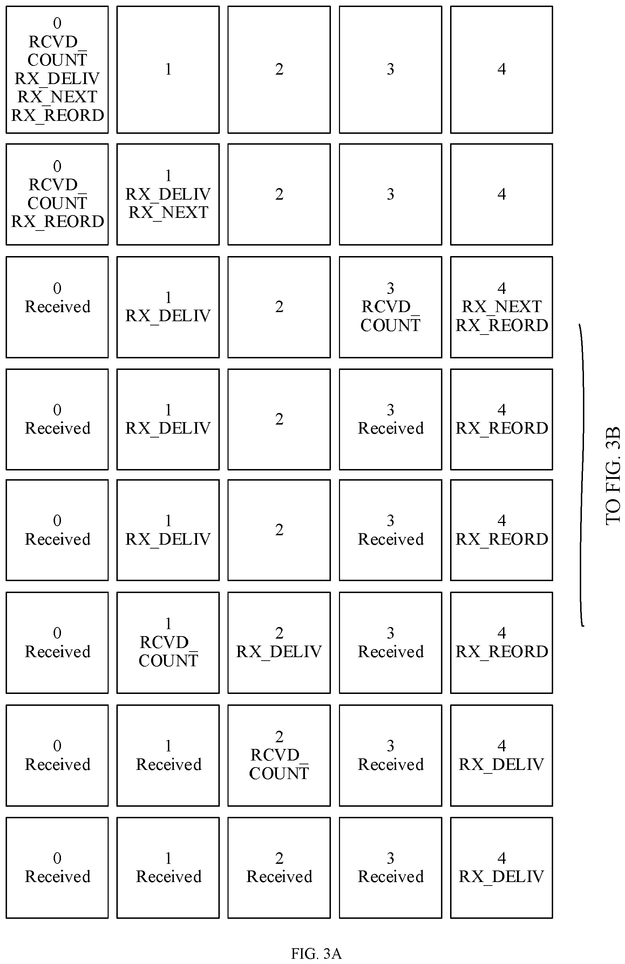

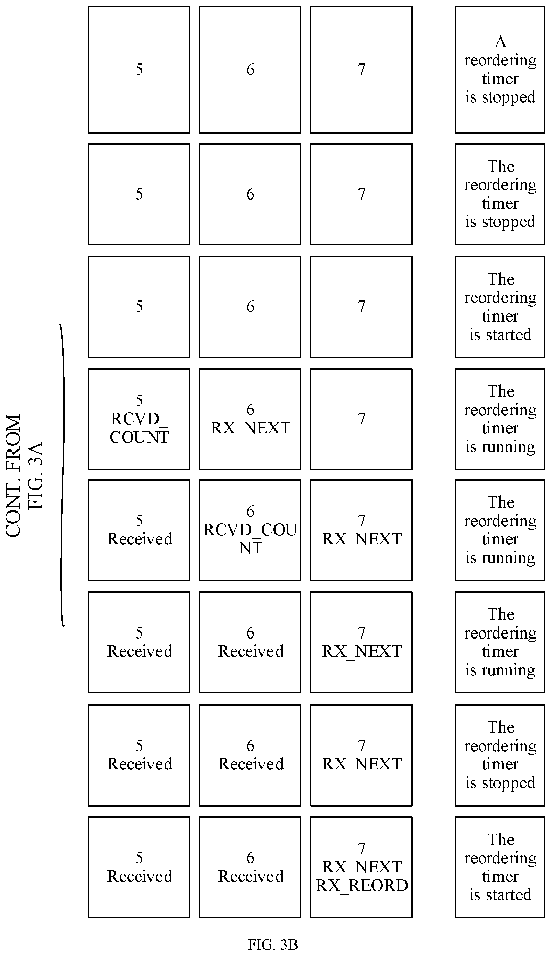

FIG. 3A and FIG. 3B are used as an example for description below. FIG. 3A and FIG. 3B are a schematic diagram of a process of delivering a data packet and updating each variable in a data packet (for example, a PDU or an SDU) receiving process. In FIG. 3A and FIG. 3B, each small rectangle represents one data packet, and data in the small rectangle represents a count value of the data packet. The first row to the eighth row indicate a time sequence (a data packet receiving sequence). The data packet receiving sequence shown in FIG. 3A and FIG. 3B is: 0, 3, 5, 6, 1, and 2.

In FIG. 3A and FIG. 3B, count values of data packets (service data units) are 0 to 7. It is assumed that the count values 0 to 7 are a valid receive window. First, in the first row, the receiving device does not receive a data packet. Therefore, RCVD_COUNT is 0, RXDELIV is 0, RXREORD is 0, and RX_NEXT is also 0. Because there is no out-of-order, the reordering timer is stopped.

In the second row, the receiving device receives the data packet 0. To be specific, RCVD _COUNT is 0, and RX_REORD is 0. Because in-order delivery needs to be ensured and the packet 0 is just the first data packet, the packet 0 is delivered to the upper layer. In this case, RX DELIV is updated to 1, and RX_NEXT is also updated to 1.

In the third row, when the receiving device receives the data packet 3, RCVD_COUNT is updated to 3. Because the data packets are sent in ascending order of the count values of the data packets, it is proved that the data packet 1 and the data packet 2 have been sent, but currently are not received by the receiving device. Consequently, it is proved that out-of-order occurs because the data packet 1 and the data packet 2 that are sent before the data packet 3 are not received. In this case, RXDELIV is still 1, but RX_NEXT is updated to 4, which meets a condition of starting the reordering timer (RX DELIV < RX_NEXT). Therefore, the reordering timer is started, and the value of RX_REORD is 4.

In the fourth row, when the receiving device receives the data packet 5, RX_DELIV is still 1, the value of RX_REORD is still 4, RCVD_COUNT is updated to 5, and RX_NEXT is also updated to 6, which does not meet a condition that RX_DELIV is greater than or equal to RX_REORD. Therefore, the reordering timer continues to run (assuming that the reordering timer does not expire).

In the fifth row, when the receiving device receives the data packet 6, RX_DELIV is still 1, RX_REORD is still 4, RCVD_COUNT is updated to 6, and RX_NEXT is also updated to 7, which does not meet the condition either that RX_DELIV is greater than or equal to RX_REORD. Therefore, the reordering timer continues to run (assuming that the reordering timer does not expire).

In the sixth row, when the receiving device receives the data packet 1, in other words, when RCVD_COUNT is updated to 1, the data packet 1 needs to be delivered because the data packet 0 has been delivered and the data packet 1 is the second data packet to be delivered in order. In this case, RXDELIV is updated to 2, RXREORD is still 4, and RX_NEXT is still 7, which does not meet the condition either that RX_DELIV is greater than or equal to RX_REORD. Therefore, the reordering timer continues to run (assuming that the reordering timer does not expire).

In the seventh row, when the receiving device receives the data packet 2, in other words, when RCVD_COUNT is updated to 2, the data packet 2 and the data packet 3 need to be delivered because the data packet 0 and the data packet 1 have been delivered and the data packet 2 and the data packet 3 are the third data packet and the fourth data packet that are to be delivered in order. The reordering timer is started when the first out-of-order data packet (the data packet 3) is received. After all data packets sent before the first out-of-order data packet are received, it is proved that all the data packets sent before the first out-of-order data packet can be delivered in order. Therefore, the reordering timer is stopped, and then RX_DELIV is updated to 4.

In this case, as shown in the eighth row, RX DELIV is updated to 4, and RX_NEXT is still 7. Because RX_DELIV is less than RX NEXT, the reordering timer is started. The value of RX_REORD is 7. Essentially, the data packet 4 to the data packet 6 are not delivered currently, but the data packet 6 and the data packet 5 are received before the data packet 4, which is equivalent to that another out-of-order data packet is received. Therefore, the reordering timer is started again.

The reordering timer is started when the first out-of-order data packet is received, and is stopped (assuming that the reordering timer does not expire in this time period) when all data packets sent before the out-of-order data packet that is received when the reordering timer is started are received (delivered to the upper layer). For example, in the procedure shown in FIG. 3A and FIG. 3B, after the data packet 0 is received, the reordering timer is started when the data packet 3 is received, and the reordering timer is stopped after the data packet 1 and the data packet 2 are received. The reordering timer is set to wait for packets that have been sent. After a data packet has been sent for a period of time, if the receiving device still does not receive the data packet (in other words, the reordering timer expires), the PDCP entity that receives a data packet delivers a data packet that is received when the reordering timer is started and all data packets that are sent before the data packet, even if the data packets that are sent before the data packet are not received. For example, as shown in FIG. 3A and FIG. 3B, in the fifth row, when the receiving device receives the data packet 6, the reordering timer expires. In this case, the receiving device delivers all data packets (including the data packet 3) that are sent before the data packet 3 to the upper layer, even if the data packet 1 and the data packet 2 are not received, which means that the data packet 1 and the data packet 2 are lost.

A DRB in an AM mode needs to ensure that no packet is lost during PDCP re-establishment. Because in-order delivery needs to be ensured, a currently received out-of-order data packet and a number (count value) of the data packet are reserved during re-establishment. In an NR PDCP re-establishment process, for example, for a terminal device, when the terminal device is handed over from a source base station to a target base station, if the reordering timer is not stopped, the reordering timer may expire before PDCP re-establishment ends, and consequently a packet loss is directly caused after the re-establishment ends. Even if the reordering timer is stopped and reset during the PDCP re-establishment, if the reordering timer is running before the PDCP re-establishment, after the PDCP re-establishment, the reordering timer may be started in a starting manner of the reordering timer when the first data packet is received. A data recovery process is a process in which a PDCP at a transmit end retransmits a data packet that has been sent but has not been received. For a PDCP at a receive end, when the transmit end performs data recovery, the receive end receives a data packet again that is not received previously. If the reordering timer is started and expires, a packet loss occurs, and consequently the following problem is caused:

If a received data packet is not an out-of-order data packet, when the reordering timer is started, a data packet that is not transmitted (or sent) subsequently needs to be transmitted before the timer expires. Otherwise, a packet loss occurs.

If a received data packet is an out-of-order data packet, but a count value of a received data packet is not greater than RX_NEXT, when the reordering timer is started, a data packet that is not transmitted (or sent) after the out-of-order data packet needs to be transmitted before the timer expires. Otherwise, a packet loss occurs.

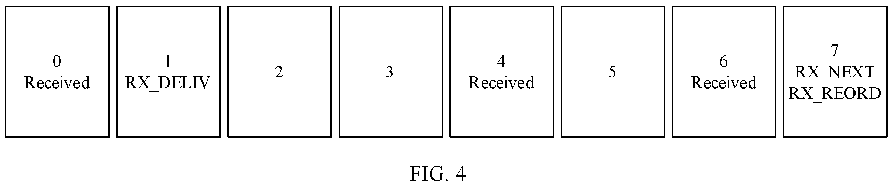

FIG. 4 is used as an example for description. FIG. 4 is a schematic diagram of a data packet received before PDCP re-establishment according to an embodiment of this application. As shown in FIG. 4, before the PDCP re-establishment, if the receiving device has received the data packet 0, the data packet 6, and the data packet 4, RX_DELIV is 1, RX_NEXT is 7, and RX_REORD is 7. During the PDCP re-establishment, the reordering timer is stopped and reset. After the PDCP re-establishment, if the first received data packet is the data packet 1 (which is not out of order), RXDELIV is updated to 2. Currently, because RX_DELIV that is equal to 2 is less than RX_NEXT that is equal to 7, the reordering timer is started. Although the target base station has not sent the data packet 2, the data packet 3, and the data packet 5, transmission needs to be completed (the data packet 2, the data packet 3, and the data packet 5 need to be received) before the reordering timer expires. Consequently, the data packet 2, the data packet 3, and the data packet 5 are lost.

After the PDCP re-establishment or data recovery, it is assumed that the first received packet is the data packet 3 (which is out of order), a value of RX_DELIV is still 1, and a value of RX_NEXT is still 7. Because RX_DELIV that is equal to 1 is less than RX_NEXT that is equal to 7, the reordering timer is started. In addition, although the data packet 5 is not sent, transmission needs to be completed before the timer expires. Consequently, if the transmission cannot be completed before the timer expires, the data packet 5 is lost.

Based on the foregoing problem, this application provides a data packet processing method, to resolve a problem that a packet loss may occur after PDCP re-establishment or data recovery because a reordering timer is started prematurely, thereby improving data transmission accuracy and data transmission efficiency, and improving user experience.

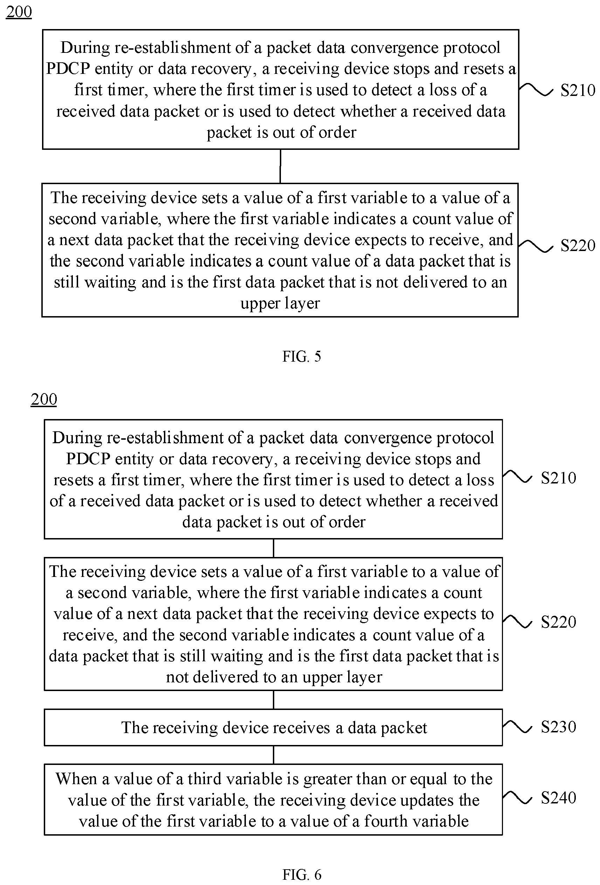

With reference to FIG. 5, the following specifically describes a data packet processing method provided in this application. FIG. 5 is a schematic flowchart of a data packet processing method 200 according to an embodiment of this application. The method 200 may be applied to the scenario shown in FIG. 1, and certainly may also be applied to another communication scenario. This is not limited in this embodiment of this application.

As shown in FIG. 5, the method 200 includes the following steps.

S210: During re-establishment of a packet data convergence protocol PDCP entity or data recovery, if a first timer is running, a receiving device stops and resets the first timer, or only stops the first timer, where the first timer is used to detect a loss of a received data packet or is used to detect whether a received data packet is out of order.

S220: The receiving device sets a value of a first variable to a value of a second variable, where the first variable indicates a count value of a next data packet that the receiving device expects to receive, and the second variable indicates a count value of a data packet that is still waiting and is the first data packet that is not delivered to an upper layer.

According to the data packet processing method provided in this embodiment of this application, a DRB in an AM mode needs to ensure that no packet is lost during the PDCP re-establishment. Therefore, during re-establishment of the PDCP entity or data recovery, if the first timer is running, the first timer is stopped and reset or the first timer is stopped only, and the value of the first variable is set to the value of the second variable. Alternatively, during re-establishment of the PDCP entity or data recovery, if the first timer is running, the first timer is stopped and reset or the first timer is stopped only, and the value of the first variable is set to the value of the second variable during re-establishment of the PDCP entity or data recovery. The first variable indicates the count value of the next data packet that the receiving device expects to receive, and the second variable indicates the count value of the data packet that is still waiting and is the first data packet that is not delivered to the upper layer. In this way, after the re-establishment or data recovery, a time of starting the first timer is delayed. This prevents a packet loss caused by premature start of the first timer, and prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

The following describes the method 200 in this embodiment of this application with reference to the example shown in FIG. 4.

In S210, it is assumed that the receiving device has received the data packet 0, the data packet 6, and the data packet 4 before re-establishment of the packet data convergence protocol PDCP entity or data recovery. In this case, the first timer is running. The first timer (a reordering timer is used as an example for description) is used to detect a loss of a received data packet or is used to detect whether a received data packet is out of order. Therefore, during re-establishment of the packet data convergence protocol PDCP entity or data recovery, the receiving device stops and resets the first timer, to be specific, stops the first timer and resets a value of the timer to 0, or only stops the first timer. In this case, the first variable (RX NEXT is used as an example for description below) is 7, and the second variable (RX_DELIV is used as an example for description below) is 1.

It should be understood that, during re-establishment of the packet data convergence protocol PDCP entity or data recovery, even if the first timer is not running, the value of the first variable is set to the value of the second variable.

In S220, the receiving device sets the value of the first variable to the value of the second variable, in other words, sets a value of RX_NEXT to 1. To be specific, after variable value setting, both the first variable and the second variable are 1. In other words, RX_NEXT = 1, and RX DELIV = 1.

After re-establishment of the PDCP entity or data recovery, if the first received data packet is the data packet 1 (which is not out of order), RX_NEXT is updated to 2, and RXDELIV is updated to 2. A start condition of the first timer is: RX_DELIV < RX_NEXT. Therefore, the first timer is not started. To be specific, the receiving device continues to receive the data packet 2, the data packet 3, and the data packet 5. The data packet 2, the data packet 3, and the data packet 5 do not need to be delivered together with the data packet 1 and the data packet 2. This is different from the prior art (the prior art may cause start of the first timer) in which transmission needs to be completed (the first timer is not started) before the first timer expires. Therefore, a possibility that the data packet 2, the data packet 3, and the data packet 5 are lost is significantly reduced.

After the PDCP re-establishment or data recovery, if the first received packet is the data packet 3 (which is out of order), and the second variable (RX_DELIV) is still 1, RX_NEXT is updated to 5, which meets the start condition of the first timer. Therefore, the first timer is started. Because the data packet 3 is received, it is proved that the data packet 1 and the data packet 2 have been sent (in order), but are not received by the receiving device. In this case, before the first timer expires, if the data packet 1 and the data packet 2 are received, the data packet 1 to the data packet 3 are delivered, and therefore no packet loss occurs. This is different from the prior art in which the data packet 5 has not been sent, but transmission needs to be completed before the first timer expires, without a need of waiting for receiving of the data packet 5 that has not been sent. In other words, before the first timer expires, only a data packet that has been sent needs to be delivered, and a data packet that has not been sent does not need to be delivered. This prevents a data packet that has not been sent from being lost.

Optionally, in an embodiment, as shown in FIG. 6, the method 200 further includes the following steps:
S230: The receiving device receives a data packet.
S240: When a value of a third variable is greater than or equal to the value of the first variable, the receiving device updates the value of the first variable to a value of a fourth variable, where the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

Specifically, the receiving device may receive the data packet before re-establishment of the packet data convergence protocol PDCP entity or data recovery, or after re-establishment of the packet data convergence protocol PDCP entity or data recovery.

It is assumed that the receiving device receives a data packet after re-establishment of the PDCP entity or data recovery. With reference to the example shown in FIG. 4, it is assumed that a count value (COUNT) of the first received data packet is 2, in other words, the value of the third variable (RCVD_COUNT is used as an example for description below) is 2, and the value of the first variable (RX NEXT) is 1. Therefore the value of the third variable is greater than the value of the first variable. In this case, the value of the first variable is updated to 3. In other words, the value of the third variable is updated to the value of the fourth variable. The fourth variable indicates the count value that is greater than the value of the third variable and that is of the first data packet that is not received, or the fourth variable indicates 1 plus a largest count value in consecutive count values starting from the value of the third variable that are in count values of data packets received by the PDCP entity. For example, after the data packet 2 is received, received data packets are the data packet 0, the data packet 2, the data packet 4, and the data packet 6, and the value of the third variable is 2. In this case, the count value that is greater than the value of the third variable and that is of the first data packet that is not received is 3. In other words, the value of the fourth variable is 3. Therefore, the value of the first variable is updated from 1 to the value 3 of the fourth variable.

For another example, with reference to the example shown in FIG. 4, before re-establishment of the PDCP entity or data recovery, it is assumed that a count value (COUNT) of the first received data packet is 3, in other words, the value of the third variable (which is equivalent to RCVD_COUNT) is 3, and the value of the first variable (RX_NEXT) is 1. In this case, the value of the third variable is greater than the value of the first variable, and therefore the value of the first variable is updated to 5. After the data packet 3 is received, received data packets are the data packet 0, the data packet 3, the data packet 4, and the data packet 6. In this case, the count value that is greater than the value of the third variable and that is of the first data packet that is not received is 5. In other words, the value of the fourth variable is 5. Therefore, the value of the first variable is updated from 1 to the value 5 of the fourth variable.

Alternatively, the fourth variable indicates 1 plus a largest count value in consecutive count values starting from the value of the third variable that are in count values of data packets received by the PDCP entity. Specifically, with reference to the example shown in FIG. 4, for example, after re-establishment of the PDCP entity or data recovery, it is assumed that a count value (COUNT) of the first received data packet is 2, in other words, the value of the third variable (which is equivalent to RCVD_COUNT) is 2, and the value of the first variable (RX_NEXT) is 1. In this case, the value of the third variable is greater than the value of the first variable. Count values of data packets received by the PDCP entity are 0, 2, 4, and 6. In the count values of the received data packets, there is no count value that starts from 2 and that is consecutive with 2. In this case, the count value 2 is the largest, and 2 plus 1 equals 3. To be specific, the value of the first variable is updated from 1 to the value 3 of the fourth variable.

For another example, with reference to the example shown in FIG. 4, after re-establishment of the PDCP entity or data recovery, it is assumed that a count value (COUNT) of the first received data packet is 3, in other words, the value of the third variable (which is equivalent to RCVD_COUNT) is 3, and the value of the first variable (RX_NEXT) is 1. In this case, the value of the third variable is greater than the value of the first variable. Count values of data packets received by the PDCP entity are 0, 3, 4, and 6. In the count values of the received data packets, a count value that starts from 3 and that is consecutive with 3 is 4, and 4 is the largest count value consecutive with 3. Therefore, 4 plus 1 equals 5. To be specific, the value of the first variable is updated from 1 to the value 5 of the fourth variable.

According to the data packet processing method provided in this embodiment of this application, the value of the first variable (RX_NEXT) may be updated based on a situation of a data packet actually received by the receiving device. Therefore, the first variable can better conform to a physical definition of the first variable. To be specific, the first variable is updated to the count value of the next data packet that the receiving device expects to receive. In addition, accuracy and efficiency of data packet transmission and delivery are improved, and user experience is improved.

Optionally, in an embodiment, the method 200 further includes the following step:
S250: If the receiving device is configured by the upper layer to send a PDCP status report, the receiving device generates a bit map in the PDCP status report before the receiving device sets the value of the first variable to the value of the second variable.

Alternatively, if the receiving device is configured by the upper layer to send a PDCP status report, the receiving device generates a bit map in the PDCP status report based on a value of the first variable and a value of the second variable that are obtained before re-establishment of the PDCP entity or data recovery.

Specifically, for the DRB in the AM mode, the PDCP status report may need to be sent during re-establishment of the PDCP entity or data recovery. The PDCP status report includes two parts. A first part is a count value of the first lost data packet (first missed count). If the receiving device is configured by the upper layer to send the PDCP status report, the PDCP status report always includes the first part. A second part is a bit map (bit map). Each bit in the bit map represents a status of a data packet. For example, 0 indicates "not received", and 1 indicates "received". A condition for determining whether the PDCP status report includes the second part is as follows: When the value of the first variable (RX_NEXT) is greater than the value of the second variable (RX_DELIV), the PDCP status report includes the second part. If this condition is met, the PDCP status report (including the first part and the second part) is generated and the PDCP status report is sent to the upper layer. Because the value of RX_NEXT is changed during the PDCP re-establishment or data recovery, comparison needs to be performed by using values of RX_NEXT and RX_DELIV that are obtained before re-establishment of the PDCP entity or data recovery, or determining needs to be performed by using the value of the first variable and the value of the second variable that are obtained before the value of the first variable is set to the value of the second variable, so as to determine whether the generated PDCP status report includes the second part.

The example shown in FIG. 4 is used for description. Before re-establishment of the PDCP entity or data recovery, the receiving device has received the data packet 0, the data packet 6, and the data packet 4. In this case, RXDELIV is 1, and RX_NEXT is 7. The receiving device is configured by the upper layer to send the PDCP status report. The receiving device stops and resets the first timer or only stops the first timer, and sets the value of the first variable to the value of the second variable, in other words, sets the value of RX_NEXT to 1. After variable value setting, both the first variable and the second variable are 1. In other words, RX_NEXT = 1, and RX_DELIV = 1. In this case, the receiving device needs to determine, by using the value of the first variable and the value of the second variable that are obtained before the receiving device sets the value of the first variable to the value of the second variable or before re-establishment of the PDCP entity or data recovery, whether the PDCP status report includes the second part (bit map). Before the receiving device sets the value of the first variable to the value of the second variable, or before re-establishment of the PDCP entity or data recovery, the value of the first variable (RX DELIV) is 1, and the value of the second variable (RX NEXT) is 7. Because the condition that RX_NEXT is greater than RX_DELIV is met, the generated PDCP status report includes the second part (bit map). The bit map may be 10001010, where 1 indicates "received", and 0 indicates "not received". The PDCP status report also includes the first part. In other words, the count value of the first lost data packet is 1.

Optionally, in an embodiment, the method 200 further includes the following step:
S260: During re-establishment of the PDCP entity or data recovery, the receiving device sets a value of a fifth variable to the value of the second variable that is obtained when the first timer is stopped and reset, or sets a value of a fifth variable to the value of the second variable that is obtained when the first timer is stopped, or sets a value of a fifth variable to the value of the first variable that is obtained when the first timer is stopped and reset, or sets a value of a fifth variable to the value of the first variable that is obtained when the first timer is stopped, or sets a value of a fifth variable to an initial value of the fifth variable, or sets a value of a fifth variable to be unchanged, where the fifth variable indicates a count value of a data packet that is obtained when the first timer is triggered to be started.

Specifically, during re-establishment of the PDCP entity or data recovery, because the first timer needs to be stopped and reset or the first timer needs to be stopped only, after the first timer is stopped and reset or after the first timer is stopped, the value of the fifth variable (RX_REORD is used as an example for description below) is set to the value of the second variable (RX_DELIV) that is obtained when the first timer is stopped and reset, or is set to the value of the second variable that is obtained when the first timer is stopped, or is set to the value of the first variable (RX_NEXT) that is obtained when the first timer is stopped and reset, or is set to the value of the first variable that is obtained when the first timer is stopped, or is set to the initial value 0 of the fifth variable, or is set to be unchanged.

The following uses FIG. 4 as an example for description.

It is assumed that the receiving device has received the data packet 0, the data packet 6, and the data packet 4 before re-establishment of the packet data convergence protocol PDCP entity or data recovery, and the first timer is running. In this case, RX_REORD = RX_NEXT = 7, and RX DELIV = 1. After the first timer is stopped and reset or the first timer is stopped only, and the value of the first variable is set to the value of the second variable, the value of the first variable RX_NEXT is 1. Therefore, the value of the fifth variable RX_REORD is set to the value of the second variable RX_DELIV that is obtained when the first timer is stopped and reset (or when the first timer is stopped only), in other words, is set to 1, or the value of the fifth variable RX_REORD is set to the value of the first variable RX_NEXT that is obtained when the first timer is stopped and reset (or when the first timer is stopped only), in other words, is set to 7, or the value of the fifth variable RX_REORD is set to the initial value 0 of the fifth variable, or the value of the fifth variable RX_REORD is set to be unchanged, in other words, is set to be 7. During re-establishment of the PDCP entity or data recovery, the receiving device sets the value of the fifth variable RX_REORD, which is equivalent to that the value of the fifth variable RX_REORD that is obtained before the timer is started is reset to 0 when the timer is started next time, in other words, equivalent to that no out-of-order data packet is received. The value of RX_REORD can be flexibly set.

It should be understood that, in this embodiment of this application, during re-establishment of the PDCP entity or data recovery, the receiving device may alternatively set the value of the fifth variable to another value. This is not limited in this embodiment of this application.

Optionally, in an embodiment, the method 200 further includes the following step:
S270: When the first timer is not running, and the value of the second variable is less than the value of the first variable, the receiving device starts the first timer.

Specifically, when the first timer is not running, and the value of the second variable (RX_DELIV) is less than the value of the first variable (RX_NEXT), it is proved that an out-of-order data packet is received. For example, FIG. 4 is used as an example for description. To be specific, data packets received before the re-establishment or data recovery are the data packet 0, the data packet 6, and the data packet 4. It is assumed that the first timer is stopped during the PDCP re-establishment or data recovery. In other words, RX_NEXT = 1, and RX_DELIV = 1. If the data packet 3 is received after the re-establishment, the first variable is updated to 5, but the second variable is still 1. Therefore, the value of the second variable is less than the value of the first variable. To be specific, the data packet 1 and the data packet 2 should be received first, but the data packet 3 is received first. Consequently, out-of-order occurs. In this case, the first timer is started, to wait for receiving of the data packet 1 and the data packet 2, and the value of RX_REORD is updated to the value of RX_NEXT. In other words, the value of RX_REORD is updated to 5. If the data packet 1 and the data packet 2 are received before the first timer expires, the data packets (the data packet 1 to the data packet 4) received before the data packet 5 are delivered to the upper layer. If the data packet 1 and/or the data packet 2 are/is not received before the first timer expires, the data packet (the data packet 3) received before the data packet 5 is delivered when the first timer expires, which means that the data packet 1 and/or the data packet 2 are/is lost.

Optionally, in an embodiment, the method 200 further includes the following step:
S280: When the first timer is not running, and the value of the second variable is less than the value of the first variable, the receiving device updates the value of the fifth variable to the value of the first variable, where the fifth variable indicates the count value of the data packet that is obtained when the first timer is triggered to be started.

Specifically, when the first timer is not running, and the value of the second variable (RX_DELIV) is less than the value of the first variable (RX_NEXT), it is proved that an out-of-order data packet is received. In this case, the first timer is started, and the value of the fifth variable (which is equivalent to RX_REORD) is updated to the value of the first variable. The fifth variable indicates the count value of the data packet that is obtained when the first timer is triggered to be started.

For example, it is assumed that the data packet 0 has been received, to be specific, RX_NEXT = 1, RX_DELIV = 1, and RX_REORD is 0. If the data packet 3 is first received after the data packet 0, the first variable RX_NEXT is updated to 4, but the second variable RX_DELIV is still 1. Therefore, the value of the second variable is less than the value of the first variable. To be specific, the data packet 1 and the data packet 2 should be received first, but the data packet 3 is received first. Consequently, out-of-order occurs. In this case, the first timer is started, to wait for receiving of the data packet 1 and the data packet 2, and the value of RX_REORD is updated to the value of RX_NEXT. In other words, the value of RX_REORD is updated to 4. If the data packet 1 and the data packet 2 are received before the first timer expires, the receiving device delivers the data packets (the data packet 1 to the data packet 3) received before the data packet 4 to the upper layer. If the data packet 1 and/or the data packet 2 are/is not received before the first timer expires, when the first timer expires, the receiving device delivers the data packet (the data packet 3) received before the data packet 4, which means that the data packet 1 and/or the data packet 2 are/is lost.

Optionally, the first timer is a reordering timer, or the first timer may be another timer used to detect a loss of a received data packet or is used to detect whether a received data packet is out of order. This is not limited in this embodiment of this application.

Optionally, in an embodiment, the method 200 further includes the following step:
S290: When the first timer expires, the receiving device delivers a data packet.

Specifically, the first timer is used to detect a loss of a received data packet or is used to detect whether a received data packet is out of order. The first timer is started when the first out-of-order data packet is received, and is stopped (assuming that the reordering timer does not expire in this time period) when all data packets sent before the out-of-order data packet that is received when the first timer is started are received (delivered to the upper layer). When the first timer expires, the PDCP entity that receives a data packet delivers a data packet that is received when the reordering timer is started and all data packets that are sent before the data packet, even if the data packets that are sent before the data packet are not received. For example, as shown in FIG. 3A and FIG. 3B, in the fifth row, when the receiving device receives the data packet 6, the first timer expires. In this case, the receiving device delivers all data packets (including the data packet 3) that are sent before the data packet 3 to the upper layer, even if the data packet 1 and the data packet 2 are not received, which means that the data packet 1 and the data packet 2 are lost.

For another example, it is assumed that the data packet 0 has been received, and it is assumed that the data packet 3 is first received after the data packet 0. In this case, the first timer is started, to wait for receiving of the data packet 1 and the data packet 2. If the data packet 1 and the data packet 2 are received before the first timer expires, the receiving device delivers the data packets (the data packet 1 to the data packet 3) received before the data packet 3 to the upper layer. If the data packet 1 and/or the data packet 2 are/is not received before the first timer expires, when the first timer expires, the receiving device delivers the data packet (the data packet 3) received before the data packet 3, which means that the data packet 1 and the data packet 2 are lost. Optionally, in an embodiment, the method 200 further includes the following step.

Optionally, in an embodiment, the method 200 further includes the following step:

When the value of the third variable is equal to the value of the second variable, the receiving device delivers the data packet.

Specifically, when the value of the third variable (RCVD_COUNT) is equal to the value of the second variable (RX_DELIV), it is proved that the currently received data packet is not an out-of-order data packet, and therefore the data packet may be delivered to the upper layer.

For example, it is assumed that the data packet 0 has been received, to be specific, RX_NEXT = 1, and RX_DELIV = 1. If the data packet 1 is first received after the data packet 0, in other words, if RCVD_COUNT = RX_DELIV = 1, the data packet 1 may be delivered.

For another example, in the eighth row shown in FIG. 3A and FIG. 3B, RX_DELIV is 4, and RX_NEXT is 7. Because RX_DELIV is less than RX NEXT, the reordering timer is started. The value of RX_REORD is 7. Essentially, the data packet 4 to the data packet 6 are not delivered currently, but the data packet 6 and the data packet 5 are received before the data packet 4, which is equivalent to that another out-of-order data packet is received. Therefore, the first timer is started again. If the data packet 4 is received after the data packet 5 and the data packet 6, in other words, if RCVD_COUNT = RX_DELIV = 4, because the data packet 5 and the data packet 6 have been received, the data packet 4 to the data packet 6 may be delivered to the upper layer.

According to the data packet processing method provided in this embodiment of this application, during re-establishment of the packet data convergence protocol PDCP entity or data recovery, the first timer is stopped and reset or the first timer is stopped only, and the value of the first variable is set to the value of the second variable. In this way, after the re-establishment or data recovery, a time of starting the first timer is delayed. This prevents a packet loss caused by premature start of the first timer, and can prevent a packet loss of a data packet that is not sent after the re-establishment. After a data packet is subsequently received, the data packet may be delivered based on the first timer, the third variable, and the second variable. This improves data transmission accuracy and data transmission efficiency, and improves user experience.

It should be understood that, in the embodiments of this application, that the receiving device receives a data packet may include: The packet data convergence protocol PDCP entity of the receiving device receives the data packet, or another entity or unit of the receiving device receives the data packet. This is not limited in the embodiments of this application.

It should be further understood that, in the embodiments of this application, the first variable, the second variable, the third variable, the fourth variable, and the fifth variable are merely used to distinguish between different types of variables, may have other names, and should not be construed as any limitation on the embodiments of this application.

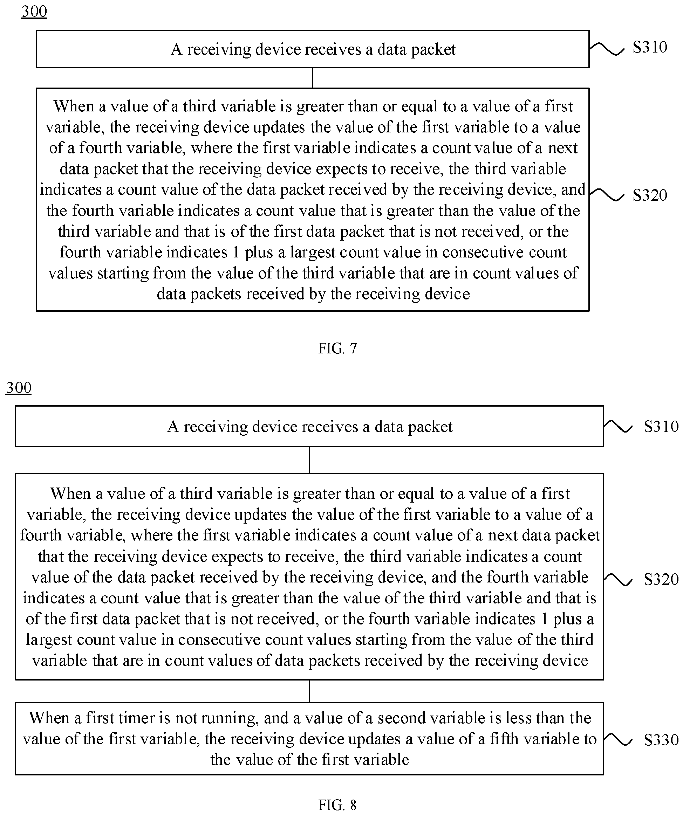

An embodiment of this application further provides a data packet processing method. As shown in FIG. 7, the method 300 includes the following steps:
S310: A receiving device receives a data packet.
S320: When a value of a third variable is greater than or equal to a value of a first variable, the receiving device updates the value of the first variable to a value of a fourth variable, where the first variable indicates a count value of a next data packet that the receiving device expects to receive, the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the receiving device.

Specifically, in a process in which the receiving device normally receives a data packet and that includes a process of receiving a data packet before re-establishment of a packet data convergence protocol PDCP entity or data recovery and a process of receiving a data packet after re-establishment of a packet data convergence protocol PDCP entity or data recovery, data packets are sent in order (in ascending order of count values) on an air interface at a transmit end (a sending device). However, because a plurality of HARQ processes run concurrently, the data packets are likely to be received by the receiving device in disorder. After the receiving device receives the data packet, with reference to the example shown in FIG. 4, after re-establishment of the PDCP entity or data recovery, it is assumed that a count value (COUNT) of the first received data packet is 2, in other words, the value of the third variable (which is equivalent to RCVD_COUNT) is 2. In this case, because the value of the first variable is set to the value of the second variable, the value of the first variable (RX_NEXT) is 1. In this case, the value of the third variable is greater than the value of the first variable, and therefore the value of the first variable is updated to 3. In other words, the value of the third variable is updated to the value of the fourth variable. The fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity. For example, after the data packet 2 is received, received data packets are the data packet 0, the data packet 2, the data packet 4, and the data packet 6, and the value of the third variable is 2. In this case, the count value that is greater than the value of the third variable and that is of the first data packet that is not received is 3. In other words, the value of the fourth variable is 3. Therefore, the value of the first variable is updated from 1 to the value 3 of the fourth variable.

For another example, if the data packet 0 and the data packet 3 have been received, RX_NEXT is updated to 4, and the value of RX_DELIV is 1. In this case, it is assumed that the data packet 5 is received, in other words, the value of the third variable (which is equivalent to RCVD_COUNT) is 5. Before the data packet is received, the value of the first variable (RX NEXT) is 4. In this case, the value of the third variable is greater than the value of the first variable, and therefore the value of the first variable is updated to 6. To be specific, after the data packet 5 is received, received data packets are the data packet 0, the data packet 3, and the data packet 5, and therefore the count value that is greater than the value of the third variable and that is of the first data packet that is not received is 6. In other words, the value of the fourth variable is 6. Therefore, the value of the first variable is updated from 4 to the value 6 of the fourth variable.

Alternatively, the fourth variable indicates 1 plus a largest count value in consecutive count values starting from the value of the third variable that are in count values of data packets received by the PDCP entity. Specifically, with reference to the example shown in FIG. 4, for example, after re-establishment of the PDCP entity or data recovery, it is assumed that a count value (COUNT) of the first received data packet is 2, in other words, the value of the third variable (which is equivalent to RCVD_COUNT) is 2, and the value of the first variable (RX_NEXT) is 1. In this case, the value of the third variable is greater than the value of the first variable. Count values of data packets received by the PDCP entity are 0, 2, 4, and 6. In the count values of the received data packets, there is no count value that starts from 2 and that is consecutive with 2. In this case, the count value 2 is the largest, and 2 plus 1 equals 3. To be specific, the value of the first variable is updated from 1 to the value 3 of the fourth variable.

For another example, if the data packet 0 and the data packet 3 have been received, RX_NEXT is 4, the value of RX_DELIV is 1, and a first timer is running. In this case, it is assumed that the data packet 5 is received, in other words, the value of the third variable (which is equivalent to RCVD_COUNT) is 5, and the value of the first variable (RX NEXT) is 4. In this case, the value of the third variable is greater than the value of the first variable, and therefore the value of the first variable is updated to 6. To be specific, after the data packet 5 is received, count values of data packets (data packets stored in the PDCP entity) received by the terminal device are 0, 3, and 5. In the count values of the received data packets, there is no count value that starts from 5 and that is consecutive with 5. In this case, the count value 5 is the largest, and 6 plus 1 equals 6. To be specific, the value of the first variable is updated from 4 to the value 6 of the fourth variable.

According to the data packet processing method provided in this embodiment of this application, the value of the first variable (RX_NEXT) may be updated based on a situation of a data packet actually received by the receiving device. Therefore, the first variable can better conform to a physical definition of the first variable. To be specific, the first variable is updated to the count value of the next data packet that the receiving device expects to receive. In addition, accuracy and efficiency of data packet transmission and delivery are improved, and user experience is improved.

Optionally, in an embodiment, as shown in FIG. 8, the method 300 further includes the following step:
S330: When the first timer is not running, and a value of a second variable is less than the value of the first variable, the receiving device updates a value of a fifth variable to the value of the first variable, where the first timer is used to detect a loss of a received data packet or is used to detect whether a received data packet is out of order, the second variable indicates a count value of a data packet that is still waiting and is the first data packet that is not delivered to an upper layer, and the fifth variable indicates a count value of a data packet that is obtained when the first timer is triggered to be started.

Specifically, when the first timer is not running, and the value of the second variable (RX_DELIV) is less than the value of the first variable (RX NEXT), it is proved that an out-of-order data packet is received. In this case, the first timer is started, and the value of the fifth variable (which is equivalent to RX_REORD) is updated to the value of the first variable. The fifth variable indicates the count value of the data packet that is obtained when the first timer is triggered to be started.

For example, it is assumed that the data packet 0 has been received, to be specific, RX_NEXT = 1, RX_DELIV = 1, RX_REORD is 0, and the first timer is stopped. If the data packet 3 is first received after the data packet 0, the first variable RX_NEXT is updated to 4, but the second variable RX_DELIV is still 1. Therefore, the value of the second variable is less than the value of the first variable. To be specific, the data packet 1 and the data packet 2 should be received first, but the data packet 3 is received first. Consequently, out-of-order occurs. In this case, the first timer is started, to wait for receiving of the data packet 1 and the data packet 2, and the value of RX_REORD is updated to the value of RX_NEXT. In other words, the value of RX_REORD is updated to 4. If the data packet 1 and the data packet 2 are received before the first timer expires, the receiving device delivers the data packets (the data packet 1 to the data packet 3) received before the data packet 4 to the upper layer. If the data packet 1 and/or the data packet 2 are/is not received before the first timer expires, when the first timer expires, the receiving device delivers the data packet (the data packet 3) received before the data packet 4, which means that the data packet 1 and/or the data packet 2 are/is lost.

Optionally, the first timer is a reordering timer, or the first timer may be another timer used to detect a loss of a received data packet or is used to detect whether a received data packet is out of order. This is not limited in this embodiment of this application.

Optionally, in an embodiment, the method 300 further includes the following steps:
S340: During re-establishment of a packet data convergence protocol PDCP entity or data recovery, the receiving device stops and resets the first timer, or stops the first timer, where the first timer is used to detect a loss of a received data packet or is used to detect whether a received data packet is out of order.
S350: The receiving device sets the value of the first variable to a value of a second variable, where the second variable indicates a count value of a data packet that is still waiting and is the first data packet that is not delivered to an upper layer.

Specifically, a DRB in an AM mode needs to ensure that no packet is lost during the PDCP re-establishment. Therefore, during re-establishment of the PDCP entity or data recovery, if the first timer is running, the first timer is stopped and reset or the first timer is stopped, and the value of the first variable is set to the value of the second variable. Alternatively, during re-establishment of the PDCP entity or data recovery, if the first timer is running, the first timer is stopped and reset or the first timer is stopped, and the value of the first variable is set to the value of the second variable during re-establishment of the PDCP entity or data recovery. The first variable indicates the count value of the next data packet that the receiving device expects to receive, and the second variable indicates the count value of the data packet that is still waiting and is the first data packet that is not delivered to the upper layer. In this way, after the re-establishment or data recovery, a time of starting the first timer is delayed. This prevents a packet loss caused by premature start of the first timer, and prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

Optionally, in an embodiment, the method 300 further includes the following step:
S360: If the receiving device is configured by the upper layer to send a PDCP status report, the receiving device generates a bit map in the PDCP status report before the receiving device sets the value of the first variable to the value of the second variable.

Alternatively, if the receiving device is configured by the upper layer to send a PDCP status report, the receiving device generates a bit map in the PDCP status report based on a value of the first variable and a value of the second variable that are obtained before re-establishment of the PDCP entity or data recovery.

Optionally, in an embodiment, the method 300 further includes the following step:
S370: When the first timer is not running, and the value of the second variable is less than the value of the first variable, the receiving device starts the first timer.

Specifically, when the first timer is not running, and the value of the second variable (RX_DELIV) is less than the value of the first variable (RX NEXT), it is proved that an out-of-order data packet is received. For example, FIG. 4 is used as an example for description. To be specific, data packets received before the re-establishment or data recovery are the data packet 0, the data packet 6, and the data packet 4. It is assumed that the first timer is stopped during the PDCP re-establishment or data recovery, and RX_NEXT is set to the value of RX_DELIV in a re-establishment process. In other words, RX_NEXT = 1, and RX_DELIV = 1. If the data packet 3 is received after the re-establishment, the first variable is updated to 5, but the second variable is still 1. Therefore, the value of the second variable is less than the value of the first variable. To be specific, the data packet 1 and the data packet 2 should be received first, but the data packet 3 is received first. Consequently, out-of-order occurs. In this case, the first timer is started, to wait for receiving of the data packet 1 and the data packet 2, and the value of RX_REORD is updated to the value of RX_NEXT. In other words, the value of RX_REORD is updated to 5. If the data packet 1 and the data packet 2 are received before the first timer expires, the data packets (the data packet 1 to the data packet 4) received before the data packet 5 are delivered to the upper layer. If the data packet 1 and/or the data packet 2 are/is not received before the first timer expires, the data packet (the data packet 3) received before the data packet 5 is delivered when the first timer expires, which means that the data packet 1 and/or the data packet 2 are/is lost.

Optionally, in an embodiment, the method 300 further includes the following step:
S380: When the first timer expires, the receiving device delivers a data packet.

Optionally, in an embodiment, the method 300 further includes the following step:
S390: When the value of the third variable is equal to the value of the second variable, the receiving device delivers a data packet.

It should be understood that steps S350 to S390 are similar to corresponding steps in the method 200, and details are not described herein again.

According to the data packet processing method provided in this embodiment of this application, after a data packet is received, based on a count value of the data packet, the value of the first variable (RX NEXT) may be updated based on a situation of a data packet actually received by the receiving device. To be specific, when the value of the third variable (RCVD_COUNT) is greater than or equal to the value of the first variable (RX_NEXT), the receiving device updates the value of the first variable to the count value that is greater than the value of the third variable and that is of the first data packet that is not received, or updates the value of the first variable to a largest count value in consecutive count values starting from the value of the third variable that are in count values of data packets received by the receiving device. Therefore, the first variable can better conform to a physical definition of the first variable. To be specific, the first variable is updated to the count value of the next data packet that the receiving device expects to receive. Subsequently, after a data packet is received, the data packet may be delivered based on the first timer, the third variable, and the first variable. This improves data transmission accuracy and data transmission efficiency, and improves user experience.

It should be understood that, in the embodiments of this application, that the receiving device receives a data packet may include: The packet data convergence protocol PDCP entity of the receiving device receives the data packet, or another entity or unit of the receiving device receives the data packet. This is not limited in the embodiments of this application.

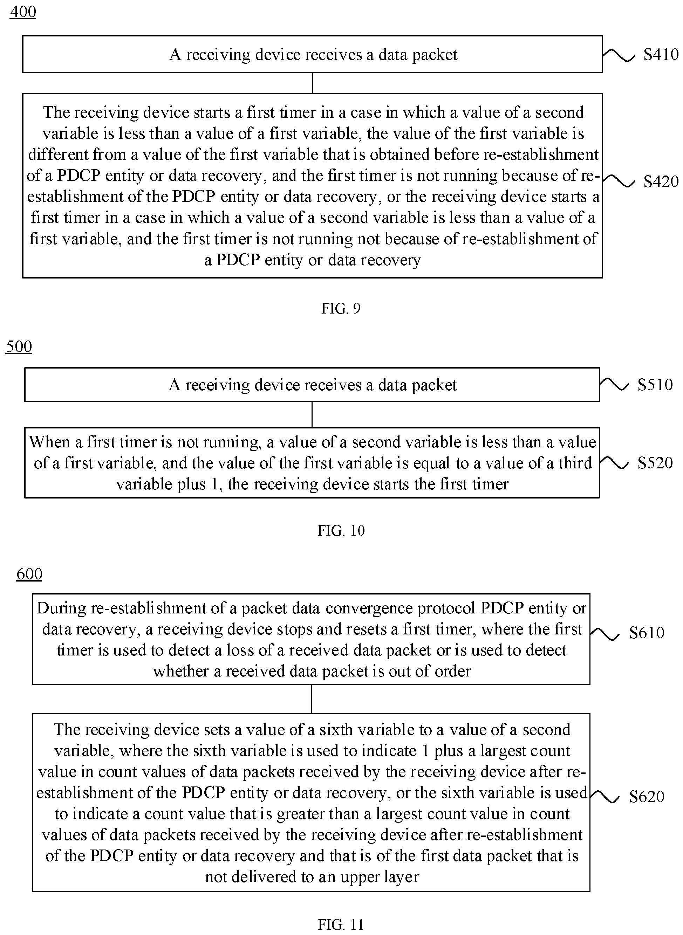

An embodiment of this application further provides a data packet processing method. As shown in FIG. 9, the method 400 includes the following steps:
S410: A receiving device receives a data packet.
S420: The receiving device starts a first timer in a case in which a value of a second variable is less than a value of a first variable, the value of the first variable is different from a value of the first variable that is obtained before re-establishment of a packet data convergence protocol PDCP entity or data recovery, and the first timer is not running because of re-establishment of the PDCP entity or data recovery.

Alternatively, the receiving device starts a first timer in a case in which a value of a second variable is less than a value of a first variable, and the first timer is not running not because of re-establishment of a packet data convergence protocol PDCP entity or data recovery.

The first timer is used to detect a loss of a received data packet or is used to detect whether a received data packet is out of order, the first variable indicates a count value of a next data packet that the receiving device expects to receive, and the second variable indicates a count value of a data packet that is still waiting and is the first data packet that is not delivered to an upper layer.

According to the data packet processing method provided in this embodiment of this application, a start condition of the first timer is changed, so that a time of starting the first timer is delayed. This prevents a packet loss caused by premature start of the first timer, and can prevent a packet loss caused during re-establishment of the PDCP entity or data recovery, thereby improving data transmission accuracy and data transmission efficiency, and improving user experience.

The following describes the method 400 in this embodiment of this application with reference to the example shown in FIG. 4.

In S410, the receiving device receives the data packet, and the receiving device may receive the data packet before re-establishment of the packet data convergence protocol PDCP entity or data recovery, or after re-establishment of the packet data convergence protocol PDCP entity or data recovery.

It is assumed that the receiving device has received the data packet 0, the data packet 6, and the data packet 4 before re-establishment of the packet data convergence protocol PDCP entity or data recovery, and the first timer is running. The first timer (which is equivalent to a reordering timer) is used to detect a loss of a received data packet or is used to detect whether a received data packet is out of order. In this case, during re-establishment of the packet data convergence protocol PDCP entity or data recovery, if the first timer is stopped and reset, to be specific, if the first timer is stopped and a value of the timer is reset to 0, or if the first timer is stopped only, the first variable (which is equivalent to RX_NEXT) is 7, and the second variable (which is equivalent to RX_DELIV) is 1.

In S420, after re-establishment of the PDCP entity or data recovery, if the first received data packet is the data packet 1 (which is not out of order), and RX_NEXT is still 7, RX_DELIV is updated to 2. Alternatively, it is assumed that the first received data packet is the data packet 3, RX_NEXT is still 7, and RX_DELIV is still 1. The first timer has the following start conditions: The first timer is stopped during re-establishment of the PDCP entity or data recovery, the value of the second variable is less than the value of the first variable, and the value of the first variable is different from the value of the first variable that is obtained before re-establishment of the PDCP entity or data recovery. First, the first timer is not running because of re-establishment of the PDCP entity or data recovery, and therefore the first condition is met. Second, the value of the second variable (RX_DELIV) is less than the value of the first variable (RX_NEXT), and therefore the second condition is met. Finally, the value of the first variable (RX_NEXT) is 7 and is the same as the value of the first variable that is obtained before re-establishment of the PDCP entity or data recovery, and therefore the third condition is not met. In this case, the first timer is not started. To be specific, the first timer can be started only when a count value (COUNT) that is greater than or equal to 7 and that is of the first received data packet is received. Essentially, the first timer is not started when a data packet before the data packet 7 is received. To be specific, the first timer is not started before all out-of-order data packets before a largest count value of a data packet that is received before re-establishment are received. This is different from the prior art. The first timer is started after the data packet 3 is received, and consequently the data packet 5 is lost, which prevents a packet loss of a data packet that is not sent.

For another example, in S420, after re-establishment of the PDCP entity or data recovery, or before re-establishment of the PDCP entity or data recovery, the receiving device receives data packets. It is assumed that the data packets received by the receiving device are the data packet 0 and the data packet 1, and the first timer (which is equivalent to the reordering timer) is stopped. In this case, the first variable (which is equivalent to RX_NEXT) is 2, and the second variable (which is equivalent to RX_DELIV) is 2. If the first received data packet is the data packet 4, RX_NEXT is updated to 5, but RX DELIV is 2. In this case, the start condition of the first timer is met in a case in which the value of the second variable (RX_DELIV) is less than the value of the first variable (RX_NEXT), and the first timer is not running not because of re-establishment of the PDCP entity or data recovery. Therefore, the first timer is started. This improves data transmission accuracy and data transmission efficiency, and improves user experience.

Optionally, in an embodiment, the method 400 further includes the following step:
S430: The receiving device updates a value of a fifth variable to the value of the first variable, where the fifth variable indicates a count value of a data packet that is obtained when the first timer is triggered to be started.

Specifically, when the first timer is started, it is proved that an out-of-order data packet is received, and the value of the fifth variable (which is equivalent to RX_REORD) is updated to the value of the first variable (RX NEXT). The fifth variable indicates the count value of the data packet that is obtained when the first timer is triggered to be started.

With reference to the example in FIG. 4, it is assumed that a data packet that is first received after the re-establishment or data recovery is the data packet 7, in other words, RX_NEXT = 8, RXDELIV = 1. Therefore, the start condition of the first timer is met, and the first timer is started. In this case, the value of RX_REORD is updated to the value of RX_NEXT, in other words, the value of RX_REORD is updated to 8. If all data packets before a data packet 8 are received before the first timer expires, the receiving device delivers all the data packets before the data packet 8 to the upper layer. If some data packets before the data packet 8 are not received before the first timer expires, the receiving device delivers the data packets before the data packet 8 when the first timer expires, which means that a data packet that is not received is lost.

Optionally, the first timer is a reordering timer, or the first timer may be another timer used to detect a loss of a received data packet or is used to detect whether a received data packet is out of order. This is not limited in this embodiment of this application.

Optionally, in an embodiment, the method 400 further includes the following step:
S440: When a value of a third variable is greater than or equal to the value of the first variable, the receiving device updates the value of the first variable to a value of a fourth variable, where the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

Optionally, in an embodiment, the method 400 further includes the following step:
S450: During re-establishment of the PDCP entity or data recovery, the receiving device updates a value of a fifth variable to the value of the second variable that is obtained when the first timer is stopped and reset, or updates a value of a fifth variable to the value of the second variable that is obtained when the first timer is stopped, or updates a value of a fifth variable to the value of the first variable that is obtained when the first timer is stopped and reset, or updates a value of a fifth variable to the value of the first variable that is obtained when the first timer is stopped, or updates a value of a fifth variable to an initial value of the fifth variable, or sets a value of a fifth variable to be unchanged, where the fifth variable indicates a count value of a data packet that is obtained when the first timer is triggered to be started.

Optionally, in an embodiment, the method 400 further includes the following step:

During re-establishment of the PDCP entity or data recovery, if the first timer is running, the receiving device stops and resets the first timer, or only stops the first timer.

Optionally, in an embodiment, the method 400 further includes the following step:
S460: When the first timer expires, the receiving device delivers a data packet.

Optionally, in an embodiment, the method 400 further includes the following step:
S470: When the value of the third variable is equal to the value of the second variable, the receiving device delivers a data packet.

Optionally, in an embodiment, that the receiving device receives a data packet includes: The packet data convergence protocol PDCP entity of the receiving device receives the data packet.

It should be understood that the foregoing steps S440 to S470 are similar to corresponding steps in the method 300 or the method 200. For corresponding descriptions, refer to the foregoing descriptions, and details are not described herein again.

It should be further understood that, in the embodiments of this application, that the receiving device receives a data packet may include: The packet data convergence protocol PDCP entity of the receiving device receives the data packet, or another entity or unit of the receiving device receives the data packet. This is not limited in this embodiment of this application.

According to the data packet processing method provided in this embodiment of this application, a DRB in an AM mode needs to ensure that no packet is lost during the PDCP re-establishment. Therefore, during re-establishment of the PDCP entity or data recovery, the first timer is stopped and reset or the first timer is stopped only. The start condition of the first timer is changed, so that a time of starting the first timer is delayed after the re-establishment or data recovery. This prevents a packet loss caused by premature start of the first timer, and can prevent a packet loss caused during re-establishment of the PDCP entity or data recovery. Subsequently, after a data packet is received, the data packet may be delivered based on the first timer, the third variable, and the first variable. This improves data transmission accuracy and data transmission efficiency, and improves user experience.

An embodiment of this application further provides a data packet processing method. As shown in FIG. 10, the method 500 includes the following steps:
S510: A receiving device receives a data packet.
S520: When a first timer is not running, a value of a second variable is less than a value of a first variable, and the value of the first variable is equal to a value of a third variable plus 1, the receiving device starts the first timer, where the first variable indicates a count value of a next data packet that the receiving device expects to receive, the second variable indicates a count value of a data packet that is still waiting and is the first data packet that is not delivered to an upper layer, the third variable indicates a count value of the data packet received by the receiving device, and the first timer is used to detect a loss of a received data packet or is used to detect whether a received data packet is out of order.

According to the data packet processing method provided in this embodiment of this application, after the receiving device receives the data packet, a start condition of the first timer is changed, so that a time of starting the first timer is delayed. This prevents a packet loss caused by premature start of the first timer, and can prevent a packet loss caused because of re-establishment of a PDCP entity or data recovery, thereby improving data transmission accuracy and data transmission efficiency, and improving user experience.

Specifically, in a process in which the receiving device normally receives a data packet, with reference to the example shown in FIG. 4, it is assumed that the first timer is stopped because of re-establishment of the PDCP entity or data recovery, the first variable (which is equivalent to RX_NEXT) is 7, and the second variable (which is equivalent to RX_DELIV) is 1. After re-establishment of the PDCP entity or data recovery, it is assumed that a count value (COUNT) of the first received data packet is 3, in other words, the value of the third variable (which is equivalent to RCVD_COUNT) is 3. The first timer has the following start conditions: The first timer is not running, the value of the second variable is less than the value of the first variable, and the value of the first variable is equal to the value of the third variable plus 1. First, the first timer is not running, and therefore the first condition is met. Second, the value of the second variable (RX_DELIV) is less than the value of the first variable (RX_NEXT), and therefore the second condition is met. Finally, the value of the first variable (RX NEXT) is 7 and is not equal to the third variable plus 1, and therefore the third condition is not met. In this case, the first timer is not started. To be specific, the first timer can be started only when a count value (COUNT) that is greater than or equal to 7 and that is of the first received data packet is received. Essentially, the first timer is not started when a data packet before the data packet 6 is received. To be specific, the first timer is not started before all out-of-order data packets before a largest count value of a data packet that is received before re-establishment are received. This is different from the prior art. The first timer is started after the data packet 3 is received, and consequently the data packet 5 is lost.

For another example, it is assumed that the receiving device has received the data packet 0 and the data packet 1, and the first timer (which is equivalent to a reordering timer) is stopped. In this case, the first variable (which is equivalent to RX_NEXT) is 2, and the second variable (which is equivalent to RX_DELIV) is 2. If a data packet that is first received subsequently is the data packet 4, in other words, if the value of the third variable (which is equivalent to RCVD_COUNT) is 4, RX_NEXT is updated to 5, but RX_DELIV is 2. In this case, because the first timer is stopped, the value of the second variable (RX DELIV) is less than the value of the first variable (RX_NEXT), and the value 5 of the first variable is equal to the value 4 of the third variable plus 1, the start condition of the first timer is met, and therefore the first timer is started. This can prevent a packet loss caused during delivery when data packets are received in disorder, thereby improving data transmission accuracy and data transmission efficiency, and improving user experience.

Optionally, in an embodiment, the method 500 further includes the following step:
S530: When the first timer is not running, the value of the second variable is less than the value of the first variable, and the value of the first variable is equal to the value of the third variable plus 1, the receiving device updates a value of a fifth variable to the value of the first variable, where the fifth variable indicates a count value of a data packet that is obtained when the first timer is triggered to be started.

Optionally, in an embodiment, the method 500 further includes the following step:
S540: When the first timer expires, the receiving device delivers a data packet.

Optionally, in an embodiment, the method 500 further includes the following step:
S550: When the value of the third variable is equal to the value of the second variable, the receiving device delivers a data packet.

Optionally, in an embodiment, the method 500 further includes the following step:
S560: During re-establishment of the PDCP entity or data recovery, if the first timer is running, stop and reset the first timer, or only stop the first timer.

Optionally, in an embodiment, that the receiving device receives a data packet includes: The packet data convergence protocol PDCP entity of the receiving device receives the data packet.

Optionally, the first timer is a reordering timer, or the first timer may be another timer used to detect a loss of a received data packet or is used to detect whether a received data packet is out of order. This is not limited in this embodiment of this application.

It should be understood that the foregoing steps S530 to S560 are similar to corresponding steps in the method 400, the method 300, or the method 200. For corresponding descriptions, refer to the foregoing descriptions, and details are not described herein again.

It should be further understood that, in the embodiments of this application, that the receiving device receives a data packet may include: The packet data convergence protocol PDCP entity of the receiving device receives the data packet, or another entity or unit of the receiving device receives the data packet. This is not limited in this embodiment of this application.

According to the data packet processing method provided in this embodiment of this application, after the receiving device receives the data packet, a start condition of the first timer is changed, so that the time of starting the first timer is delayed. This prevents a packet loss caused by premature start of the first timer, and can prevent a packet loss caused during re-establishment of the PDCP entity or data recovery, thereby improving data transmission accuracy and data transmission efficiency, and improving user experience.

An embodiment of this application further provides a data packet processing method. As shown in FIG. 11, the method 600 includes the following steps:
S610: During re-establishment of a packet data convergence protocol PDCP entity or data recovery, a receiving device stops and resets a first timer, or only stops the first timer, where the first timer is used to detect a loss of a received data packet or is used to detect whether a received data packet is out of order.
S620: The receiving device sets a value of a sixth variable to a value of a second variable, where the sixth variable is used to indicate 1 plus a largest count value in count values of data packets received by the receiving device after re-establishment of the PDCP entity or data recovery, or the sixth variable is used to indicate a count value that is greater than a largest count value in count values of data packets received by the receiving device after re-establishment of the PDCP entity or data recovery and that is of the first data packet that is not delivered to an upper layer, and the second variable indicates a count value of a data packet that is still waiting and is the first data packet that is not delivered to the upper layer.

The following describes the method 600 in this embodiment of this application with reference to the example shown in FIG. 4.

In S610, it is assumed that the receiving device has received the data packet 0, the data packet 6, and the data packet 4 before re-establishment of the packet data convergence protocol PDCP entity or data recovery, and the first timer is running. The first timer (which is equivalent to a reordering timer) is used to detect a loss of a received data packet or is used to detect whether a received data packet is out of order. In this case, during re-establishment of the packet data convergence protocol PDCP entity or data recovery, the first timer is stopped and reset, to be specific, the first timer is stopped and a value of the timer is reset to 0, or the first timer is stopped only. In this case, the first variable (which is equivalent to RX_NEXT) is 7, and the second variable (which is equivalent to RX_DELIV) is 1.

In S620, the receiving device sets the value of the sixth variable to the value of the second variable. The sixth variable is used to indicate 1 plus the largest count value in the count values of the data packets received by the receiving device after re-establishment of the PDCP entity or data recovery. Because the largest count value in the count values of the received data packets is 6, the value of the sixth variable is 7. Alternatively, the sixth variable is used to indicate the count value that is greater than the largest count value in the count values of the data packets received by the receiving device after re-establishment of the PDCP entity or data recovery and that is of the first data packet that is not delivered to the upper layer. Because the largest count value in the count values of the data packets received after re-establishment of the PDCP entity or data recovery is 6, and the count value that is greater than 6 and that is of the first data packet that is not delivered is 7, the value of the sixth variable is 7. The value of the sixth variable is set to the value of the second variable, and the value of the sixth variable is set to 1.

According to the data packet processing method provided in this embodiment of this application, a DRB in an AM mode needs to ensure that no packet is lost during the PDCP re-establishment. Therefore, during re-establishment of the PDCP entity or data recovery, the first timer is stopped and reset (reset to 0) or the first timer is stopped only, a new variable (the sixth variable) is introduced, and the value of the sixth variable is set to the value of the second variable. After re-establishment of the PDCP entity or data recovery, the sixth variable is used to replace the first variable. To be specific, a data packet is delivered based on the sixth variable, the second variable, and the first timer. After the re-establishment or data recovery, the first timer is prevented from being started when no out-of-order packet is received. This prevents a packet loss caused by premature start of the first timer, and prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

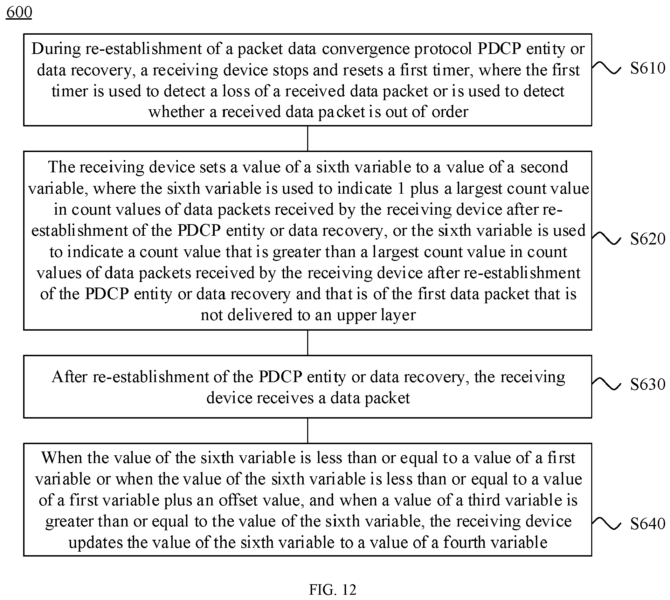

Optionally, in an embodiment, as shown in FIG. 12, the method 600 further includes the following steps:
S630: After re-establishment of the PDCP entity or data recovery, the receiving device receives a data packet.
S640: When the value of the sixth variable is less than or equal to a value of a first variable or when the value of the sixth variable is less than or equal to a value of a first variable plus an offset value, and when a value of a third variable is greater than or equal to the value of the sixth variable, the receiving device updates the value of the sixth variable to a value of a fourth variable, where the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity. The offset value is 0 or a positive value.

Specifically, after re-establishment of the PDCP entity or data recovery, the receiving device receives data packets. It is assumed that a count value (COUNT) of the first received data packet is 2, in other words, the value of the third variable (which is equivalent to RCVD_COUNT) is 2. In this case, the value of the sixth variable is 1, and the first variable (RX NEXT) is 7. Therefore, the value of the sixth variable is less than the value of the first variable, and the value of the third variable is greater than the value of the sixth variable. In this case, the value of the sixth variable is updated to 3, in other words, the value of the third variable is updated to the value of the fourth variable. The fourth variable indicates the value of the third variable plus 1, or the fourth variable indicates the count value that is greater than the value of the third variable and that is of the first data packet that is not received, or the fourth variable indicates 1 plus the largest count value in the consecutive count values starting from the value of the third variable that are in the count values of the data packets received by the PDCP entity. For example, after the data packet 2 is received, received data packets are the data packet 0, the data packet 2, the data packet 4, and the data packet 6, and the value of the third variable is 2. In this case, the count value that is greater than the value of the third variable and that is of the first data packet that is not received is 3. In other words, the value of the fourth variable is 3. Therefore, the value of the first variable is updated from 1 to the value 3 of the fourth variable. Alternatively, count values of data packets received by the PDCP entity are 0, 2, 4, and 6. In the count values of the received data packets, there is no count value that starts from 2 and that is consecutive with 2. In this case, the count value 2 is the largest, and 2 plus 1 equals 3. To be specific, the value of the sixth variable is updated from 1 to the value 3 of the fourth variable.

It should be understood that the offset value is 0 or a positive value. Specifically, the offset value may be 0. In other words, the value of the sixth variable is less than or equal to the value 7 of the first variable. Alternatively, the offset value may be a positive number greater than 0, for example, 2. With reference to the example shown in FIG. 4, when the sixth variable is less than or equal to 9, the sixth variable, the second variable, and the third variable are used to control a switch of the first timer, and the data packet is delivered by using the first timer. When the value of the sixth variable is greater than the value of the first variable, or the value of the sixth variable is greater than the value of the first variable plus the offset value, the first variable, the second variable, and the third variable are used to control the switch of the first timer, and the data packet is delivered by using the first timer.

According to the data packet processing method provided in this embodiment of this application, during re-establishment of the PDCP entity or data recovery, the first timer is stopped and reset (reset to 0) or the first timer is stopped only, a new variable (the sixth variable) is introduced, and the value of the sixth variable is set to the value of the second variable. After re-establishment of the PDCP entity or data recovery, when the value of the sixth variable is less than or equal to the value of the first variable or when the value of the sixth variable is less than or equal to the value of the first variable plus the offset value, the sixth variable is used to replace the first variable. To be specific, a data packet is delivered based on the sixth variable, the second variable, and the first timer. When the value of the sixth variable is greater than the value of the first variable or when the value of the sixth variable is greater than the value of the first variable plus the offset value, the receiving device continues to deliver the data packet by using the first variable, the second variable, and the first timer. After the re-establishment or data recovery, a time of starting the first timer is delayed. This prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

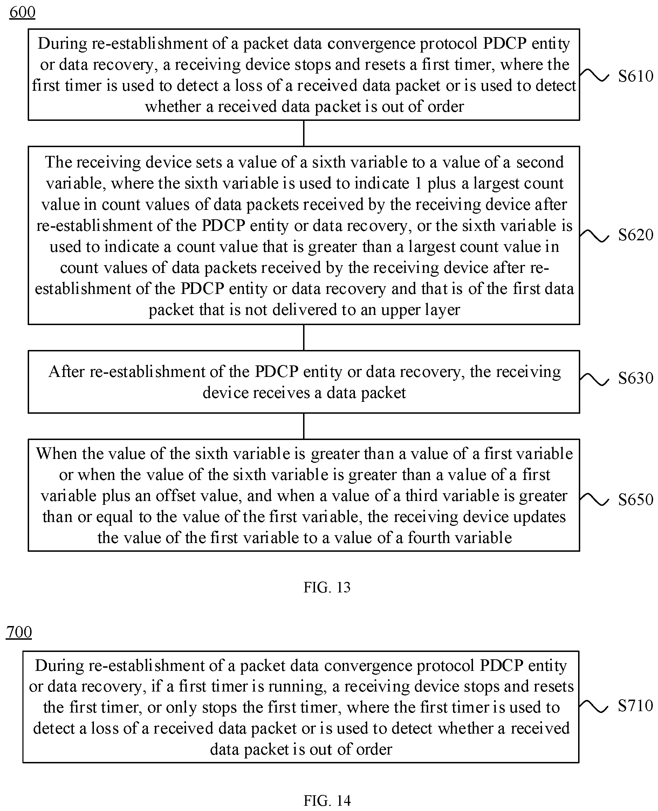

Optionally, in an embodiment, as shown in FIG. 13, the method 600 further includes the following step:
S650: When the value of the sixth variable is greater than a value of a first variable or when the value of the sixth variable is greater than a value of a first variable plus an offset value, and when a value of a third variable is greater than or equal to the value of the first variable, the receiving device updates the value of the first variable to a value of a fourth variable, where the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

According to the data packet processing method provided in this embodiment of this application, after re-establishment of the PDCP entity or data recovery, when the value of the sixth variable is less than or equal to the value of the first variable or when the value of the sixth variable is less than or equal to the value of the first variable plus the offset value, the sixth variable is used to replace the first variable. To be specific, a data packet is delivered based on the sixth variable, the second variable, and the first timer. When the value of the sixth variable is greater than the value of the first variable or when the value of the sixth variable is greater than the value of the first variable plus the offset value, the receiving device continues to deliver the data packet by using the first variable, the second variable, and the first timer. After the re-establishment or data recovery, it is ensured that the first timer is not started when no out-of-order packet is received. This prevents a packet loss caused when the first timer expires after re-establishment of the PDCP entity or data recovery, thereby improving user experience.

Optionally, in an embodiment, the method 600 further includes the following step:
S660: During re-establishment of the PDCP entity or data recovery, the receiving device sets a value of a fifth variable to the value of the second variable that is obtained when the first timer is stopped and reset, or sets a value of a fifth variable to the value of the second variable that is obtained when the first timer is stopped, or sets a value of a fifth variable to the value of the first variable that is obtained when the first timer is stopped and reset, or sets a value of a fifth variable to the value of the first variable that is obtained when the first timer is stopped, or sets a value of a fifth variable to the value of the sixth variable that is obtained when the first timer is stopped and reset, or sets a value of a fifth variable to the value of the sixth variable that is obtained when the first timer is stopped, or sets a value of a fifth variable to an initial value of the fifth variable, or sets a value of a fifth variable to be unchanged, where the fifth variable indicates a count value of a data packet that is obtained when the first timer is triggered to be started.

Optionally, in an embodiment, the method 600 further includes the following step:
S670: When the value of the sixth variable is less than or equal to the value of the first variable or the value of the sixth variable is less than or equal to the value of the first variable plus the offset value, and when the first timer is not running and the value of the second variable is less than the value of the sixth variable, the receiving device starts the first timer.

Optionally, in an embodiment, the method 600 further includes the following step:
S680: When the value of the sixth variable is less than or equal to the value of the first variable or the value of the sixth variable is less than or equal to the value of the first variable plus the offset value, and when the first timer is not running and the value of the second variable is less than the value of the sixth variable, the receiving device updates a value of a fifth variable to the value of the sixth variable, where the fifth variable indicates a count value of a data packet that is obtained when the first timer is triggered to be started.

Optionally, in an embodiment, the method 600 further includes the following step:
S690: When the first timer expires, the receiving device delivers a data packet.

Optionally, in an embodiment, the method 600 further includes the following step:

When the value of the third variable is equal to the value of the second variable, the receiving device delivers a data packet.

Optionally, in an embodiment, that the receiving device receives a data packet includes: The packet data convergence protocol PDCP entity of the receiving device receives the data packet.

Optionally, the first timer is a reordering timer, or the first timer may be another timer used to detect a loss of a received data packet or is used to detect whether a received data packet is out of order. This is not limited in this embodiment of this application.

It should be understood that, in the embodiments of this application, that the receiving device receives a data packet may include: The packet data convergence protocol PDCP entity of the receiving device receives the data packet, or another entity or unit of the receiving device receives the data packet. This is not limited in this embodiment of this application.

It should be further understood that the foregoing steps 650 to S690 are similar to corresponding steps in the method 500, the method 400, the method 300, or the method 200. For corresponding descriptions, refer to the foregoing descriptions, and details are not described herein again.

This application further provides a data packet processing method. As shown in FIG. 14, the method 700 includes the following step:
S710: During re-establishment of a packet data convergence protocol PDCP entity or data recovery, if a first timer is running, a receiving device stops and resets the first timer, or only stops the first timer, where the first timer is used to detect a loss of a received data packet or is used to detect whether a received data packet is out of order.

According to the data packet processing method provided in this application, during re-establishment of the PDCP entity or data recovery, if the first timer is running, the first timer is stopped and reset (or reset to 0), or the first timer is stopped only. This prevents a packet loss caused when the timer expires during the PDCP re-establishment, thereby improving data transmission accuracy and data transmission efficiency, and improving user experience.

Optionally, in an embodiment, the method further includes: setting, by the receiving device, a value of a first variable to a value of a second variable, where the first variable indicates a count value or a sequence number of a next data packet that the receiving device expects to receive, and the second variable indicates a count value or a sequence number of a data packet that is still waiting and is the first data packet that is not delivered to an upper layer, or the second variable indicates 1 plus a count value or a sequence number of the latest data packet that is delivered to an upper layer.

Optionally, in an embodiment, before re-establishment of the PDCP entity or data recovery, the PDCP entity has a reordering function. In addition, after re-establishment of the PDCP entity or data recovery, when the PDCP is connected to two radio link control RLC entities in an acknowledged mode AM, the terminal device stops and resets the first timer, or only stops the first timer.

Optionally, in an embodiment, the first timer is a reordering timer.

It should be understood that corresponding steps in the method are similar to corresponding steps in the method 200 to the method 600. For brevity, details are not described herein again.

It should be further understood that, in the embodiments of this application, all conditions about RX_NEXT > RX_DELIV may be replaced with a condition of "at least one stored PDCP SDU". In other words, when there is at least one stored PDCP SDU, a condition of RX_NEXT > RX_DELIV is met.

It should be further understood that, in the embodiments of this application, the first variable, the second variable, the third variable, the fourth variable, the fifth variable, and the sixth variable may be represented by using count values (COUNT) of data packets, or may be represented by using sequence numbers (sequence number) of data packets. For example, the first variable may be a sequence number (which may be represented by Next_PDCP_RX_SN) of a next data packet that the receiving device expects to receive, the second variable may be 1 plus a sequence number (which may be represented by Last_Submitted_PDCP_RX_SN) of the latest data packet that is delivered to the upper layer, the third variable may be a sequence number of a received data packet. For example, after the PDCP re-establishment, the first timer is stopped and reset, and that the value of the first variable is set to the value of the second variable may be: setting Next_PDCP_RX_SN to Last_Submitted_PDCP_RX_SN.

It should be further understood that, in the embodiments of this application, when a PDCP is re-established by using the reordering function, and the re-established PDCP entity is connected to two RLC AM entities, the terminal device stops and resets the first timer, and sets Next_PDCP_RX_SN to Last_Submitted_PDCP_RX_SN.

It should be further understood that the foregoing description is intended to help a person skilled in the art better understand the embodiments of this application, but is not intended to limit the scope of the embodiments of this application. A person skilled in the art apparently can make various equivalent modifications or changes according to the examples described above, and such modifications or changes also fall within the scope of the embodiments of this application.

It should be understood that sequence numbers of the foregoing processes do not mean execution sequences. The execution sequences of the processes should be determined according to functions and internal logic of the processes, and should not be construed as any limitation on the implementation processes of the embodiments of this application.

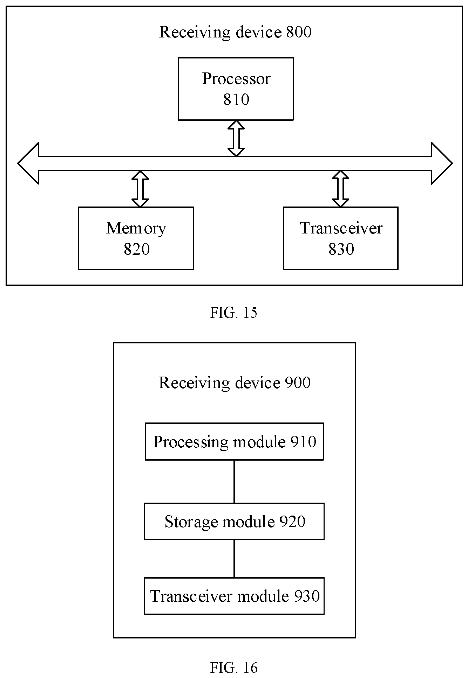

With reference to FIG. 1 to FIG. 14, the foregoing describes in detail the data packet processing methods according to the embodiments of this application. With reference to FIG. 15 to FIG. 26, the following describes in detail receiving devices according to the embodiments of this application.

FIG. 15 is a schematic block diagram of a receiving device according to an embodiment of this application. It should be understood that the receiving device may be the foregoing receiving device. A receiving device embodiment corresponds to a method embodiment. For similar descriptions, refer to the method embodiment. The receiving device 800 shown in FIG. 15 may be configured to perform the steps performed by the first receiving device corresponding to FIG. 6 and FIG. 8. The receiving device 800 includes a processor 810, a memory 820, and a transceiver 830. The processor 810, the memory 820, and the transceiver 830 are connected through communication. The memory 820 stores an instruction. The processor 810 is configured to execute the instruction stored in the memory 820. The transceiver 830 is configured to send or receive a specific signal when the transceiver 830 is driven by the processor 810.

The processor 810 is configured to: during re-establishment of a packet data convergence protocol PDCP entity or data recovery, stop and reset a first timer, or only stop the first timer, where the first timer is used to detect a loss of a received data packet or is used to detect whether a received data packet is out of order.

The processor 810 is further configured to set a value of a first variable to a value of a second variable, where the first variable indicates a count value of a next data packet that the receiving device expects to receive, and the second variable indicates a count value of a data packet that is still waiting and is the first data packet that is not delivered to an upper layer.

According to the receiving device provided in this application, during re-establishment of the PDCP entity or data recovery, if the first timer is running, the first timer is stopped and reset (or reset to 0) or the first timer is stopped only, and the value of the first variable is set to the value of the second variable. Alternatively, during re-establishment of the PDCP entity or data recovery, if the first timer is running, the first timer is stopped and reset or the first timer is stopped only, and the value of the first variable is set to the value of the second variable during re-establishment of the PDCP entity or data recovery. In this way, after the re-establishment or data recovery, a time of starting the first timer is delayed. This prevents a packet loss caused by premature start of the first timer, and prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

The components in the receiving device 800 are connected through communication. To be specific, the processor 810, the memory 820, and the transceiver 830 communicate with each other through an inner connection path, to transmit a control signal and/or a data signal. The foregoing method embodiments of this application may be applied to the processor, or the processor implements the steps of the foregoing method embodiments. The processor may be an integrated circuit chip and has a signal processing capability. In an implementation process, the steps in the foregoing method embodiments may be completed by using an integrated logic circuit of hardware in the processor, or by using an instruction in a form of software. The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The methods, the steps, and logical block diagrams that are disclosed in this application may be implemented or performed. The general purpose processor may be a microprocessor, or the processor may be any conventional processor or the like. The steps of the methods disclosed in this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information from the memory and completes the steps in the foregoing methods in combination with hardware of the processor.

Optionally, in another embodiment of this application, the transceiver 830 is configured to receive a data packet. The processor 810 is further configured to: when a value of a third variable is greater than or equal to the value of the first variable, update the value of the first variable to a value of a fourth variable, where the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

Optionally, in another embodiment of this application, the processor 810 is further configured to: if the receiving device is configured by the upper layer to send a PDCP status report, generate a bit map in the PDCP status report before the processor sets the value of the first variable to the value of the second variable; or if the receiving device is configured by the upper layer to send a PDCP status report, generate a bit map in the PDCP status report based on a value of the first variable and a value of the second variable that are obtained before re-establishment of the PDCP entity or data recovery.

Optionally, in another embodiment of this application, the processor 810 is further configured to: during re-establishment of the PDCP entity or data recovery, set a value of a fifth variable to the value of the second variable that is obtained when the first timer is stopped and reset, or set a value of a fifth variable to the value of the second variable that is obtained when the first timer is stopped, or set a value of a fifth variable to the value of the first variable that is obtained when the first timer is stopped and reset, or set a value of a fifth variable to the value of the first variable that is obtained when the first timer is stopped, or set a value of a fifth variable to an initial value of the fifth variable, or set a value of a fifth variable to be unchanged, where the fifth variable indicates a count value of a data packet that is obtained when the first timer is triggered to be started.

Optionally, in another embodiment of this application, the first timer is a reordering timer.

It should be noted that, in this embodiment of this application, the processor 810 may be implemented as a processing module, the memory 820 may be implemented as a storage module, and the transceiver 830 may be implemented as a transceiver module. As shown in FIG. 16, a receiving device 900 may include a processing module 910, a storage module 920, and a transceiver module 930.

The receiving device 800 shown in FIG. 15 or the receiving device 900 shown in FIG. 16 can implement the steps performed by the receiving device in FIG. 5 and FIG. 6. To avoid repetition, details are not described herein again.

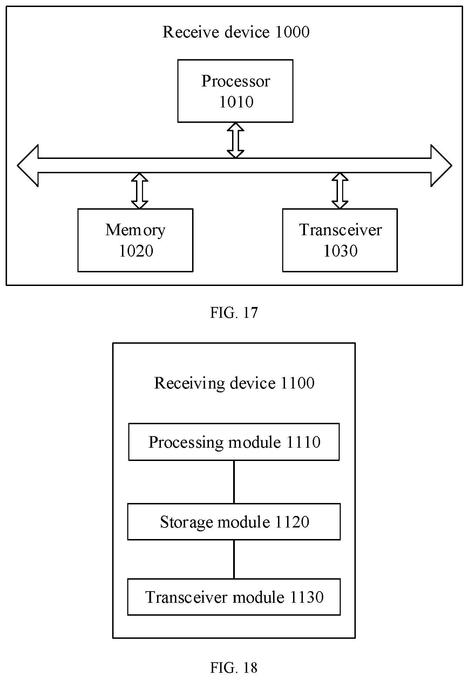

FIG. 17 is a schematic block diagram of a receiving device 1000 according to an embodiment of this application. It should be understood that a receiving device embodiment corresponds to a method embodiment. For similar descriptions, refer to the method embodiment. As shown in FIG. 17, the receiving device 1000 includes a processor 1010, a memory 1020, and a transceiver 1030. The processor 1010, the memory 1020, and the transceiver 1030 are connected through communication. The memory 1020 stores an instruction. The processor 1010 is configured to execute the instruction stored in the memory 1020. The transceiver 1030 is configured to send or receive a specific signal when the transceiver 1030 is driven by the processor 1010.

The transceiver 1030 is configured to receive a data packet.

The processor 1010 is configured to: when a value of a third variable is greater than or equal to a value of a first variable, update the value of the first variable to a value of a fourth variable, where the first variable indicates a count value of a next data packet that the receiving device expects to receive, the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the receiving device.

The receiving device provided in this application may update the value of the first variable based on a situation of a data packet actually received by the receiving device. Therefore, the first variable can better conform to a physical definition of the first variable. To be specific, the first variable is updated to the count value of the next data packet that the receiving device expects to receive. In addition, accuracy and efficiency of data packet transmission and delivery are improved, and user experience is improved.

The components in the receiving device 1000 are connected through communication. To be specific, the processor 1010, the memory 1020, and the transceiver 1030 communicate with each other through an inner connection path, to transmit a control signal and/or a data signal. The foregoing method embodiments of this application may be applied to the processor, or the processor implements the steps of the foregoing method embodiments. The processor may be an integrated circuit chip and has a signal processing capability. In an implementation process, the steps in the foregoing method embodiments may be completed by using an integrated logic circuit of hardware in the processor, or by using an instruction in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and logical block diagrams that are disclosed in this application may be implemented or performed. The general purpose processor may be a microprocessor, or the processor may be any conventional processor or the like. The steps of the methods disclosed in this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information from the memory and completes the steps in the foregoing methods in combination with hardware of the processor.

Optionally, in another embodiment of this application, the processor 1010 is further configured to:
when a first timer is not running, and a value of a second variable is less than the value of the first variable, update a value of a fifth variable to the value of the first variable, where the first timer is used to detect a loss of a received data packet or is used to detect whether a received data packet is out of order, the second variable indicates a count value of a data packet that is still waiting and is the first data packet that is not delivered to an upper layer, and the fifth variable indicates a count value of a data packet that is obtained when the first timer is triggered to be started.

Optionally, in another embodiment of this application, the processor 1010 is further configured to: if the receiving device is configured by the upper layer to send a PDCP status report, generate a bit map in the PDCP status report before the processor sets the value of the first variable to the value of the second variable; or if the receiving device is configured by the upper layer to send a PDCP status report, generate a bit map in the PDCP status report based on a value of the first variable and a value of the second variable that are obtained before re-establishment of the PDCP entity or data recovery.

Optionally, in another embodiment of this application, the processor 1010 is further configured to:
during re-establishment of the packet data convergence protocol PDCP entity or data recovery, stop and reset the first timer, or only stop the first timer, where the first timer is used to detect a loss of a received data packet or is used to detect whether a received data packet is out of order; and set the value of the first variable to a value of a second variable, where the second variable indicates a count value of a data packet that is still waiting and is the first data packet that is not delivered to an upper layer.

Optionally, in another embodiment of this application, the first timer is a reordering timer.

It should be noted that, in this embodiment of this application, the processor 1010 may be implemented as a processing module, the memory 1020 may be implemented as a storage module, and the transceiver 1030 may be implemented as a transceiver module. As shown in FIG. 18, a receiving device 1100 may include a processing module 1110, a storage module 1120, and a transceiver module 1130.

The receiving device 1000 shown in FIG. 17 or the receiving device 1100 shown in FIG. 18 can implement the steps performed by the receiving device in FIG. 7 and FIG. 8. To avoid repetition, details are not described herein again.

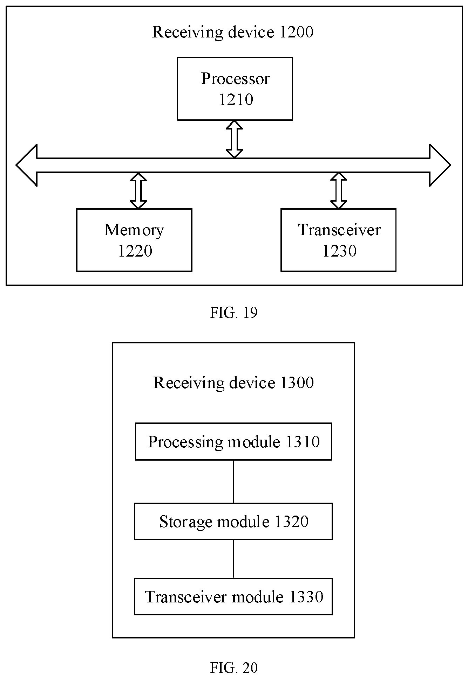

FIG. 19 is a schematic block diagram of a receiving device 1200 according to an embodiment of this application. It should be understood that a receiving device embodiment corresponds to a method embodiment. For similar descriptions, refer to the method embodiment. As shown in FIG. 19, the receiving device 1200 includes a processor 1210, a memory 1220, and a transceiver 1230. The processor 1210, the memory 1220, and the transceiver 1230 are connected through communication. The memory 1220 stores an instruction. The processor 1210 is configured to execute the instruction stored in the memory 1220. The transceiver 1230 is configured to send or receive a specific signal when the transceiver 1230 is driven by the processor 1210.

The transceiver 1230 is configured to receive a data packet.

The processor 1210 is configured to start a first timer in a case in which a value of a second variable is less than a value of a first variable, the value of the first variable is different from a value of the first variable that is obtained before re-establishment of a packet data convergence protocol PDCP entity or data recovery, and the first timer is not running because of re-establishment of the PDCP entity or data recovery; or
start a first timer in a case in which a value of a second variable is less than a value of a first variable, and the first timer is not running not because of re-establishment of a packet data convergence protocol PDCP entity or data recovery.

The first timer is used to detect a loss of a received data packet or is used to detect whether a received data packet is out of order, the first variable indicates a count value of a next data packet that the receiving device expects to receive, and the second variable indicates a count value of a data packet that is still waiting and is the first data packet that is not delivered to an upper layer.

According to the receiving device provided in this application, a start condition of the first timer is changed, so that a time of starting the first timer is delayed. This prevents a packet loss caused by premature start of the first timer, and can prevent a packet loss caused during re-establishment of the PDCP entity or data recovery, thereby improving data transmission accuracy and data transmission efficiency, and improving user experience.

The components in the receiving device 1200 are connected through communication. To be specific, the processor 1210, the memory 1220, and the transceiver 1230 communicate with each other through an inner connection path, to transmit a control signal and/or a data signal. The foregoing method embodiments of this application may be applied to the processor, or the processor implements the steps of the foregoing method embodiments. The processor may be an integrated circuit chip and has a signal processing capability. In an implementation process, the steps in the foregoing method embodiments may be completed by using an integrated logic circuit of hardware in the processor, or by using an instruction in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and logical block diagrams that are disclosed in this application may be implemented or performed. The general purpose processor may be a microprocessor, or the processor may be any conventional processor or the like. The steps of the methods disclosed in this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information from the memory and completes the steps in the foregoing methods in combination with hardware of the processor.

Optionally, in another embodiment of this application, the processor 1210 is further configured to: during re-establishment of the PDCP entity or data recovery, if the first timer is running, stop and reset the first timer, or only stop the first timer.

Optionally, in another embodiment of this application, the first timer is a reordering timer.

It should be noted that, in this embodiment of this application, the processor 1210 may be implemented as a processing module, the memory 1220 may be implemented as a storage module, and the transceiver 1230 may be implemented as a transceiver module. As shown in FIG. 20, a receiving device 1300 may include a processing module 1310, a storage module 1320, and a transceiver module 1330.

The receiving device 1200 shown in FIG. 19 or the receiving device 1300 shown in FIG. 20 can implement the steps performed by the receiving device in FIG. 9. To avoid repetition, details are not described herein again.

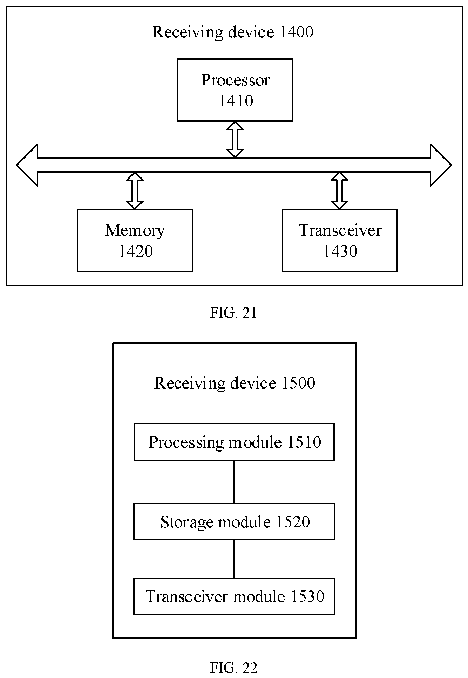

FIG. 21 is a schematic block diagram of a receiving device 1400 according to an embodiment of this application. It should be understood that a receiving device embodiment corresponds to a method embodiment. For similar descriptions, refer to the method embodiment. As shown in FIG. 21, the receiving device 1400 includes a processor 1410, a memory 1420, and a transceiver 1430. The processor 1410, the memory 1420, and the transceiver 1430 are connected through communication. The memory 1420 stores an instruction. The processor 1410 is configured to execute the instruction stored in the memory 1420. The transceiver 1430 is configured to send or receive a specific signal when the transceiver 1430 is driven by the processor 1410.

The transceiver 1430 is configured to receive a data packet.

The processor 1410 is configured to: when a first timer is not running, a value of a second variable is less than a value of a first variable, and the value of the first variable is equal to a value of a third variable plus 1, start the first timer, where the first variable indicates a count value of a next data packet that the receiving device expects to receive, the second variable indicates a count value of a data packet that is still waiting and is the first data packet that is not delivered to an upper layer, the third variable indicates a count value of the data packet received by the receiving device, and the first timer is used to detect a loss of a received data packet or is used to detect whether a received data packet is out of order.

According to the receiving device provided in this application, after the receiving device receives the data packet, a start condition of the first timer is changed, so that a time of starting the first timer is delayed. This prevents a packet loss caused by premature start of the first timer, and can prevent a packet loss caused during re-establishment of the PDCP entity or data recovery, thereby improving data transmission accuracy and data transmission efficiency, and improving user experience.

The components in the receiving device 1400 are connected through communication. To be specific, the processor 1410, the memory 1420, and the transceiver 1430 communicate with each other through an inner connection path, to transmit a control signal and/or a data signal. The foregoing method embodiments of this application may be applied to the processor, or the processor implements the steps of the foregoing method embodiments. The processor may be an integrated circuit chip and has a signal processing capability. In an implementation process, the steps in the foregoing method embodiments may be completed by using an integrated logic circuit of hardware in the processor, or by using an instruction in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and logical block diagrams that are disclosed in this application may be implemented or performed. The general purpose processor may be a microprocessor, or the processor may be any conventional processor or the like. The steps of the methods disclosed in this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information from the memory and completes the steps in the foregoing methods in combination with hardware of the processor.

Optionally, in another embodiment of this application, the processor 1410 is further configured to: when the first timer is not running, the value of the second variable is less than the value of the first variable, and the value of the first variable is equal to the value of the third variable plus 1, update a value of a fifth variable to the value of the first variable, where the fifth variable indicates a count value of a data packet that is obtained when the first timer is triggered to be started.

Optionally, in another embodiment of this application, the processor 1410 is further configured to: during re-establishment of the packet data convergence protocol PDCP entity or data recovery, if the first timer is running, stop and reset the first timer, or only stop the first timer.

Optionally, in another embodiment of this application, the first timer is a reordering timer.

It should be noted that, in this embodiment of this application, the processor 1410 may be implemented as a processing module, the memory 1420 may be implemented as a storage module, and the transceiver 1430 may be implemented as a transceiver module. As shown in FIG. 22, a receiving device 1500 may include a processing module 1510, a storage module 1520, and a transceiver module 1530.

The receiving device 1400 shown in FIG. 21 or the receiving device 1500 shown in FIG. 22 can implement the steps performed by the receiving device in FIG. 10. To avoid repetition, details are not described herein again.

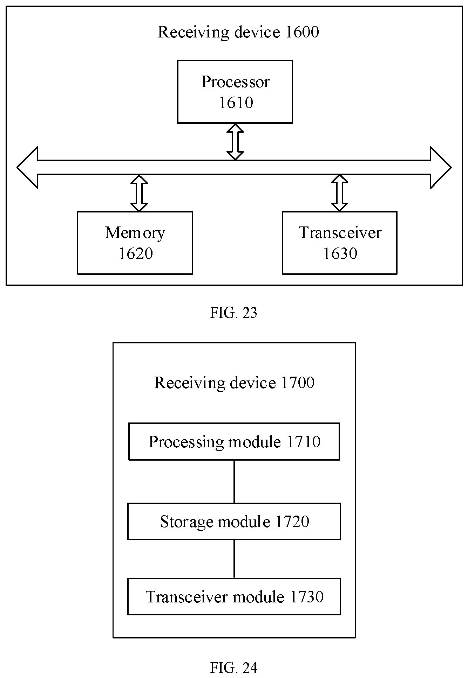

FIG. 23 is a schematic block diagram of a receiving device 1600 according to an embodiment of this application. It should be understood that a receiving device embodiment corresponds to a method embodiment. For similar descriptions, refer to the method embodiment. As shown in FIG. 23, the receiving device 1600 includes a processor 1610, a memory 1620, and a transceiver 1630. The processor 1610, the memory 1620, and the transceiver 1630 are connected through communication. The memory 1620 stores an instruction. The processor 1610 is configured to execute the instruction stored in the memory 1620. The transceiver 1630 is configured to send or receive a specific signal when the transceiver 1630 is driven by the processor 1610.

The processor 1610 is configured to: during re-establishment of a packet data convergence protocol PDCP entity or data recovery, stop and reset a first timer, or only stop the first timer, where the first timer is used to detect a loss of a received data packet or is used to detect whether a received data packet is out of order.

The processor 1610 is further configured to set a value of a sixth variable to a value of a second variable, where the sixth variable is used to indicate 1 plus a largest count value in count values of data packets received by the receiving device after re-establishment of the PDCP entity or data recovery, or the sixth variable is used to indicate a count value that is greater than a largest count value in count values of data packets received by the receiving device after re-establishment of the PDCP entity or data recovery and that is of the first data packet that is not delivered to an upper layer, and the second variable indicates a count value of a data packet that is still waiting and is the first data packet that is not delivered to the upper layer.

During re-establishment of the PDCP entity or data recovery, the receiving device provided in this application stops and resets the first timer (resets to 0) or only stops the first timer, introduces a new variable (the sixth variable), and sets the value of the sixth variable to the value of the second variable. After re-establishment of the PDCP entity or data recovery, the sixth variable is used to replace the first variable. To be specific, a data packet is delivered based on the sixth variable, the second variable, and the first timer. After the re-establishment or data recovery, the first timer is prevented from being started when no out-of-order packet is received. This prevents a packet loss caused by premature start of the first timer, and prevents a packet loss caused during re-establishment of the PDCP entity or data recovery, to be specific, can prevent a packet loss of a data packet that is not sent after the re-establishment, thereby improving data transmission accuracy and data transmission efficiency, and improving user experience.

The components in the receiving device 1600 are connected through communication. To be specific, the processor 1610, the memory 1620, and the transceiver 1630 communicate with each other through an inner connection path, to transmit a control signal and/or a data signal. The foregoing method embodiments of this application may be applied to the processor, or the processor implements the steps of the foregoing method embodiments. The processor may be an integrated circuit chip and has a signal processing capability. In an implementation process, the steps in the foregoing method embodiments may be completed by using an integrated logic circuit of hardware in the processor, or by using an instruction in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and logical block diagrams that are disclosed in this application may be implemented or performed. The general purpose processor may be a microprocessor, or the processor may be any conventional processor or the like. The steps of the methods disclosed in this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information from the memory and completes the steps in the foregoing methods in combination with hardware of the processor.

Optionally, in another embodiment of this application, the transceiver 1630 is configured to receive a data packet. The processor 1610 is further configured to: when the value of the sixth variable is less than or equal to a value of a first variable or when the value of the sixth variable is less than or equal to a value of a first variable plus an offset value, and when a value of a third variable is greater than or equal to the value of the sixth variable, update the value of the sixth variable to a value of a fourth variable, where the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

Optionally, in another embodiment of this application, the processor 1610 is further configured to: when the value of the sixth variable is greater than a value of a first variable or when the value of the sixth variable is greater than a value of a first variable plus an offset value, and when a value of a third variable is greater than or equal to the value of the first variable, update the value of the first variable to a value of a fourth variable, where the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

Optionally, in another embodiment of this application, the first timer is a reordering timer.

Optionally, in another embodiment of this application, the offset value is 0 or a positive value.

It should be noted that, in this embodiment of this application, the processor 1610 may be implemented as a processing module, the memory 1620 may be implemented as a storage module, and the transceiver 1630 may be implemented as a transceiver module. As shown in FIG. 23, a receiving device 1700 may include a processing module 1710, a storage module 1720, and a transceiver module 1730.

The receiving device 1600 shown in FIG. 23 or the receiving device 1700 shown in FIG. 24 can implement the steps performed by the receiving device in FIG. 11 to FIG. 13. To avoid repetition, details are not described herein again.

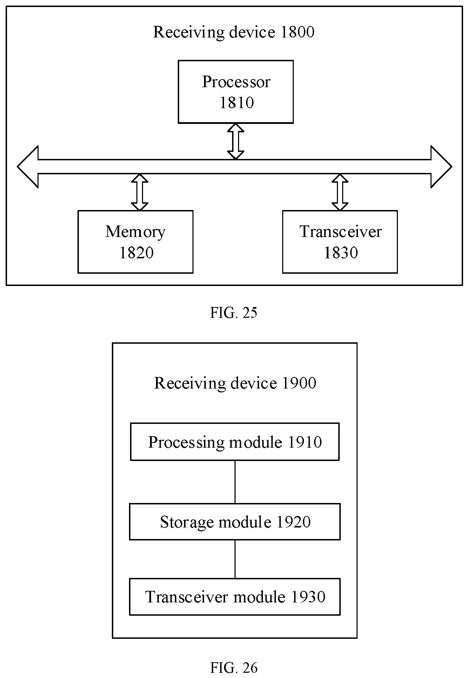

FIG. 25 is a schematic block diagram of a receiving device according to an embodiment of this application. It should be understood that a receiving device embodiment corresponds to a method embodiment. For similar descriptions, refer to the method embodiment. The receiving device 1800 shown in FIG. 25 may be configured to perform the steps performed by the receiving device corresponding to FIG. 14. The receiving device 1800 includes a processor 1810, a memory 1820, and a transceiver 1830. The processor 1810, the memory 1820, and the transceiver 1830 are connected through communication. The memory 1820 stores an instruction. The processor 1810 is configured to execute the instruction stored in the memory 1820. The transceiver 1830 is configured to send or receive a specific signal when the transceiver 1830 is driven by the processor 1810.

The processor 1810 is configured to: during re-establishment of a packet data convergence protocol PDCP entity or data recovery, if a first timer is running, stop and reset the first timer, or only stop the first timer, where the first timer is used to detect a loss of a received data packet or is used to detect whether a received data packet is out of order.

During re-establishment of the PDCP entity or data recovery, if the first timer is running, the receiving device provided in this application stops and resets the first timer (or resets to 0), or only stops the first timer. This prevents a packet loss caused when the timer expires during the PDCP re-establishment, thereby improving data transmission accuracy and data transmission efficiency, and improving user experience.

Optionally, in another embodiment of this application, the processor 1810 is further configured to set a value of a first variable to a value of a second variable, where the first variable indicates a count value or a sequence number of a next data packet that the receiving device expects to receive, and the second variable indicates a count value or a sequence number of a data packet that is still waiting and is the first data packet that is not delivered to an upper layer, or the second variable indicates 1 plus a count value or a sequence number of the latest data packet that is delivered to an upper layer.

Optionally, in another embodiment of this application, the processor 1810 is further configured to: before re-establishment of the PDCP entity or data recovery, the PDCP entity has a reordering function. In addition, after re-establishment of the PDCP entity or data recovery, the PDCP is connected to two radio link control RLC entities in an acknowledged mode AM.

It should be noted that, in this embodiment of this application, the processor 1810 may be implemented as a processing module, the memory 1820 may be implemented as a storage module, and the transceiver 1830 may be implemented as a transceiver module. As shown in FIG. 26, a receiving device 1900 may include a processing module 1910, a storage module 1920, and a transceiver module 1930.

The receiving device 1800 shown in FIG. 25 or the receiving device 1900 shown in FIG. 26 can implement the steps performed by the receiving device in FIG. 14. To avoid repetition, details are not described herein again.

An embodiment of this application further provides a computer-readable medium, configured to store computer program code. The computer program includes instructions for performing the data packet processing methods in the foregoing embodiments of this application in FIG. 5 to FIG. 14. The readable medium may be a read-only memory (read-only memory, ROM) or a random access memory (random access memory, RAM). This is not limited in the embodiments of this application.

An embodiment of this application further provides a system chip. The system chip includes a processing unit and a communications unit. The processing unit may be, for example, a processor. The communications unit may be, for example, an input/output interface, a pin, or a circuit. The processing unit may execute a computer instruction, so that a chip in the terminal is enabled to perform the data packet processing method in any implementation of the first aspect.

Optionally, the computer instruction is stored in a storage unit.

Optionally, the storage unit may be a storage unit inside the chip, such as a register or a cache. Alternatively, the storage unit may be a storage unit that is inside the terminal and that is outside the chip, such as a ROM, another type of static storage device that can store static information and an instruction, or a RAM. Any processor mentioned above may be a CPU, a microprocessor, an ASIC, or one or more integrated circuits configured to control program execution of the foregoing first direct-link data transmission method.

It should be understood that the foregoing descriptions of the embodiments of this application focus on differences between the embodiments. For same or similar parts that are not mentioned, refer to the embodiments. For brevity, details are not described herein again.

It should be understood that the term "and/or" and "at least one of A or B" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It can be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read_Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data packet processing method, comprising:
when a packet data convergence protocol PDCP entity is re-established or data recovery is performed, stopping and resetting, by a receiving device, a first timer, wherein the first timer is used to detect a loss of a received data packet or is used to detect whether a received data packet is out of order; and
setting, by the receiving device, a value of a first variable to a value of a second variable, wherein the first variable indicates a count value of a next data packet that the receiving device expects to receive, and the second variable indicates a count value of a data packet that is still waiting and is the first data packet that is not delivered to an upper layer.

2. The method according to claim 1, wherein the method further comprises:
if the receiving device is configured by the upper layer to send a PDCP status report, generating the PDCP status report before the receiving device sets the value of the first variable to the value of the second variable; or
if the receiving device is configured by the upper layer to send a PDCP status report, generating the PDCP status report based on a value of the first variable and a value of the second variable that are obtained before re-establishment of the PDCP entity or data recovery.

3. The method according to claim 1 or 2, wherein the method further comprises:
receiving, by the receiving device, a data packet; and
when a value of a third variable is greater than or equal to the value of the first variable, updating, by the receiving device, the value of the first variable to a value of a fourth variable, wherein the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

4. The method according to any one of claims 1 to 3, wherein the method further comprises:
during re-establishment of the PDCP entity or data recovery, setting, by the receiving device, a value of a fifth variable to the value of the second variable that is obtained when the first timer is stopped and reset, or setting a value of a fifth variable to the value of the first variable that is obtained when the first timer is stopped and reset, or setting a value of a fifth variable to an initial value of the fifth variable, or setting a value of a fifth variable to be unchanged, wherein the fifth variable indicates a count value of a data packet that is obtained when the first timer is triggered to be started.

5. The method according to any one of claims 1 to 4, wherein the first timer is a reordering timer.

6. A data packet processing method, comprising:
receiving, by a receiving device, a data packet; and
when a value of a third variable is greater than or equal to a value of a first variable, updating, by the receiving device, the value of the first variable to a value of a fourth variable, wherein the first variable indicates a count value of a next data packet that the receiving device expects to receive, the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the receiving device.

7. The method according to claim 6, wherein the method further comprises:
during re-establishment of a packet data convergence protocol PDCP entity or data recovery, stopping and resetting, by the receiving device, the first timer, wherein the first timer is used to detect a loss of a received data packet or is used to detect whether a received data packet is out of order; and
setting, by the receiving device, the value of the first variable to a value of a second variable, wherein the second variable indicates a count value of a data packet that is still waiting and is the first data packet that is not delivered to an upper layer.

8. The method according to claim 7, wherein the method further comprises:
if the receiving device is configured by the upper layer to send a PDCP status report, generating the PDCP status report before the receiving device sets the value of the first variable to the value of the second variable; or
if the receiving device is configured by the upper layer to send a PDCP status report, generating the PDCP status report based on a value of the first variable and a value of the second variable that are obtained before re-establishment of the PDCP entity or data recovery.

9. The method according to any one of claims 6 to 8, wherein the first timer is a reordering timer.

10. A data packet processing method, comprising:
receiving, by a receiving device, a data packet; and
starting, by the receiving device, a first timer in a case in which a value of a second variable is less than a value of a first variable, the value of the first variable is different from a value of the first variable that is obtained before re-establishment of a packet data convergence protocol PDCP entity or data recovery, and the first timer is not running because of re-establishment of the PDCP entity or data recovery; or
starting, by the receiving device, a first timer in a case in which a value of a second variable is less than a value of a first variable, and the first timer is not running not because of re-establishment of a packet data convergence protocol PDCP entity or data recovery, wherein
the first timer is used to detect a loss of a received data packet or is used to detect whether a received data packet is out of order, the first variable indicates a count value of a next data packet that the receiving device expects to receive, and the second variable indicates a count value of a data packet that is still waiting and is the first data packet that is not delivered to an upper layer.

11. The method according to claim 10, wherein the method further comprises:
during re-establishment of the PDCP entity or data recovery, if the first timer is running, stopping and resetting, by the receiving device, the first timer.

12. The method according to claim 10 or 11, wherein the first timer is a reordering timer.

13. A data packet processing method, comprising:
receiving, by a receiving device, a data packet; and
when a first timer is not running, a value of a second variable is less than a value of a first variable, and the value of the first variable is equal to a value of a third variable plus 1, starting, by the receiving device, the first timer, wherein the first variable indicates a count value of a next data packet that the receiving device expects to receive, the second variable indicates a count value of a data packet that is still waiting and is the first data packet that is not delivered to an upper layer, the third variable indicates a count value of the data packet received by the receiving device, and the first timer is used to detect a loss of a received data packet or is used to detect whether a received data packet is out of order.

14. The method according to claim 13, wherein the method further comprises:
when the first timer is not running, the value of the second variable is less than the value of the first variable, and the value of the first variable is equal to the value of the third variable plus 1, updating, by the receiving device, a value of a fifth variable to the value of the first variable, wherein the fifth variable indicates a count value of a data packet that is obtained when the first timer is triggered to be started.

15. The method according to claim 13 or 14, wherein the method further comprises:
during re-establishment of a packet data convergence protocol PDCP entity or data recovery, if the first timer is running, stopping and resetting, by the receiving device, the first timer.

16. The method according to any one of claims 13 to 15, wherein the first timer is a reordering timer.

17. A data packet processing method, comprising:
during re-establishment of a packet data convergence protocol PDCP entity or data recovery, stopping and resetting, by a receiving device, a first timer, wherein the first timer is used to detect a loss of a received data packet or is used to detect whether a received data packet is out of order; and
setting, by the receiving device, a value of a sixth variable to a value of a second variable, wherein the sixth variable is used to indicate 1 plus a largest count value in count values of data packets received by the receiving device after re-establishment of the PDCP entity or data recovery, or the sixth variable is used to indicate a count value that is greater than a largest count value in count values of data packets received by the receiving device after re-establishment of the PDCP entity or data recovery and that is of the first data packet that is not delivered to an upper layer, and the second variable indicates a count value of a data packet that is still waiting and is the first data packet that is not delivered to the upper layer.

18. The method according to claim 17, wherein the method further comprises:
receiving, by the receiving device, a data packet; and
when the value of the sixth variable is less than or equal to a value of a first variable or when the value of the sixth variable is less than or equal to a value of a first variable plus an offset value, and when a value of a third variable is greater than or equal to the value of the sixth variable, updating, by the receiving device, the value of the sixth variable to a value of a fourth variable, wherein the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

19. The method according to claim 17, wherein the method further comprises:
receiving, by the receiving device, a data packet; and
when the value of the sixth variable is greater than a value of a first variable or when the value of the sixth variable is greater than a value of a first variable plus an offset value, and when a value of a third variable is greater than or equal to the value of the first variable, updating, by the receiving device, the value of the first variable to a value of a fourth variable, wherein the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

20. The method according to claim 18 or 19, wherein
the offset value is 0 or a positive value.

21. The method according to any one of claims 17 to 20, wherein the first timer is a reordering timer.

22. A receiving device, comprising a processor, a transceiver, and a memory, wherein the memory is configured to store an instruction, and the processor is configured to execute the instruction stored in the memory, to control the transceiver to receive or send a signal;
the processor is configured to: during re-establishment of a packet data convergence protocol PDCP entity or data recovery, stop and reset a first timer, wherein the first timer is used to detect a loss of a received data packet or is used to detect whether a received data packet is out of order; and
the processor is further configured to set a value of a first variable to a value of a second variable, wherein the first variable indicates a count value of a next data packet that the receiving device expects to receive, and the second variable indicates a count value of a data packet that is still waiting and is the first data packet that is not delivered to an upper layer.

23. The receiving device according to claim 22, wherein
the processor is further configured to: if the receiving device is configured by the upper layer to send a PDCP status report, generate the PDCP status report before the processor sets the value of the first variable to the value of the second variable; or
if the receiving device is configured by the upper layer to send a PDCP status report, generate the PDCP status report based on a value of the first variable and a value of the second variable that are obtained before re-establishment of the PDCP entity or data recovery.

24. The receiving device according to claim 22 or 23, wherein
the transceiver is configured to receive a data packet; and
the processor is further configured to: when a value of a third variable is greater than or equal to the value of the first variable, update the value of the first variable to a value of a fourth variable, wherein the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

25. The receiving device according to any one of claims 22 to 24, wherein
the processor is further configured to: during re-establishment of the PDCP entity or data recovery, set a value of a fifth variable to the value of the second variable that is obtained when the first timer is stopped and reset, or set a value of a fifth variable to the value of the first variable that is obtained when the first timer is stopped and reset, or set a value of a fifth variable to an initial value of the fifth variable, or set a value of a fifth variable to be unchanged, wherein the fifth variable indicates a count value of a data packet that is obtained when the first timer is triggered to be started.

26. The receiving device according to any one of claims 22 to 25, wherein the first timer is a reordering timer.

27. A receiving device, comprising a processor, a transceiver, and a memory, wherein the memory is configured to store an instruction, and the processor is configured to execute the instruction stored in the memory, to control the transceiver to receive or send a signal;
the transceiver is configured to receive a data packet; and
the processor is configured to: when a value of a third variable is greater than or equal to a value of a first variable, update the value of the first variable to a value of a fourth variable, wherein the first variable indicates a count value of a next data packet that the receiving device expects to receive, the third variable indicates a count value of the data packet received by the receiving device, and the fourth variable indicates a count value that is greater than the value of the third variable and that is of the first data packet that is not received, or the fourth variable indicates 1 plus a largest count value in consecutive count values starting from the value of the third variable that are in count values of data packets received by the receiving device.

28. The receiving device according to claim 27, wherein the processor is further configured to:
during re-establishment of a packet data convergence protocol PDCP entity or data recovery, stop and reset the first timer, wherein the first timer is used to detect a loss of a received data packet or is used to detect whether a received data packet is out of order; and
set the value of the first variable to a value of a second variable, wherein the second variable indicates a count value of a data packet that is still waiting and is the first data packet that is not delivered to an upper layer.

29. The receiving device according to claim 28, wherein
the processor is further configured to: if the receiving device is configured by the upper layer to send a PDCP status report, generate the PDCP status report before the processor sets the value of the first variable to the value of the second variable; or
if the receiving device is configured by the upper layer to send a PDCP status report, generate the PDCP status report based on a value of the first variable and a value of the second variable that are obtained before re-establishment of the PDCP entity or data recovery.

30. The receiving device according to any one of claims 27 to 29, wherein the first timer is a reordering timer.

31. A receiving device, comprising a processor, a transceiver, and a memory, wherein the memory is configured to store an instruction, and the processor is configured to execute the instruction stored in the memory, to control the transceiver to receive or send a signal;
the transceiver is configured to receive a data packet; and
the processor is configured to start a first timer in a case in which a value of a second variable is less than a value of a first variable, the value of the first variable is different from a value of the first variable that is obtained before re-establishment of a packet data convergence protocol PDCP entity or data recovery, and the first timer is not running because of re-establishment of the PDCP entity or data recovery; or
start a first timer in a case in which a value of a second variable is less than a value of a first variable, and the first timer is not running not because of re-establishment of a packet data convergence protocol PDCP entity or data recovery, wherein
the first timer is used to detect a loss of a received data packet or is used to detect whether a received data packet is out of order, the first variable indicates a count value of a next data packet that the receiving device expects to receive, and the second variable indicates a count value of a data packet that is still waiting and is the first data packet that is not delivered to an upper layer.

32. The receiving device according to claim 31, wherein the processor is further configured to: during re-establishment of the PDCP entity or data recovery, if the first timer is running, stop and reset the first timer.

33. The receiving device according to claim 31 or 32, wherein the first timer is a reordering timer.

34. A receiving device, comprising a processor, a transceiver, and a memory, wherein the memory is configured to store an instruction, and the processor is configured to execute the instruction stored in the memory, to control the transceiver to receive or send a signal;
the transceiver is configured to receive a data packet; and
the processor is configured to: when a first timer is not running, a value of a second variable is less than a value of a first variable, and the value of the first variable is equal to a value of a third variable plus 1, start the first timer, wherein the first variable indicates a count value of a next data packet that the receiving device expects to receive, the second variable indicates a count value of a data packet that is still waiting and is the first data packet that is not delivered to an upper layer, the third variable indicates a count value of the data packet received by the receiving device, and the first timer is used to detect a loss of a received data packet or is used to detect whether a received data packet is out of order.

35. The receiving device according to claim 34, wherein the processor is further configured to:
when the first timer is not running, the value of the second variable is less than the value of the first variable, and the value of the first variable is equal to the value of the third variable plus 1, update a value of a fifth variable to the value of the first variable, wherein the fifth variable indicates a count value of a data packet that is obtained when the first timer is triggered to be started.

36. The receiving device according to claim 34 or 35, wherein the processor is further configured to:
during re-establishment of a packet data convergence protocol PDCP entity or data recovery, if the first timer is running, stop and reset the first timer.

37. The receiving device according to any one of claims 34 to 36, wherein the first timer is a reordering timer.

38. A receiving device, comprising a processor, a transceiver, and a memory, wherein the memory is configured to store an instruction, and the processor is configured to execute the instruction stored in the memory, to control the transceiver to receive or send a signal;
the processor is configured to: during re-establishment of a packet data convergence protocol PDCP entity or data recovery, stop and reset a first timer, wherein the first timer is used to detect a loss of a received data packet or is used to detect whether a received data packet is out of order; and
the processor is further configured to set a value of a sixth variable to a value of a second variable, wherein the sixth variable is used to indicate 1 plus a largest count value in count values of data packets received by the receiving device after re-establishment of the PDCP entity or data recovery, or the sixth variable is used to indicate a count value that is greater than a largest count value in count values of data packets received by the receiving device after re-establishment of the PDCP entity or data recovery and that is of the first data packet that is not delivered to an upper layer, and the second variable indicates a count value of a data packet that is still waiting and is the first data packet that is not delivered to the upper layer.

39. The receiving device according to claim 38, wherein
the transceiver is configured to receive a data packet; and
the processor is further configured to: when the value of the sixth variable is less than or equal to a value of a first variable or when the value of the sixth variable is less than or equal to a value of a first variable plus an offset value, and when a value of a third variable is greater than or equal to the value of the sixth variable, update the value of the sixth variable to a value of a fourth variable, wherein the first variable indicates a count value of a next data packet that the receiving device expects to receive, the third variable indicates a count value of the data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

40. The receiving device according to claim 38, wherein the processor is further configured to:
when the value of the sixth variable is greater than a value of a first variable or when the value of the sixth variable is greater than a value of a first variable plus an offset value, and when a value of a third variable is greater than or equal to the value of the first variable, update the value of the first variable to a value of a fourth variable, wherein the first variable indicates a count value of a next data packet that the receiving device expects to receive, the third variable indicates a count value of a data packet received by the receiving device, and the fourth variable indicates the value of the third variable plus 1, or the fourth variable indicates a count value that is greater than the value of the third variable and that is of the first data packet that is not received, or the fourth variable indicates 1 plus a largest count value in consecutive count values starting from the value of the third variable that are in count values of data packets received by the PDCP entity.

41. The receiving device according to claim 39 or 40, wherein the offset value is 0 or a positive value.

42. The receiving device according to any one of claims 38 to 41, wherein the first timer is a reordering timer.

43. A computer-readable storage medium, configured to store a computer program, wherein the computer program is used to execute an instruction of the data packet processing method according to any one of claims 1 to 21.

44. A system chip, comprising a processing unit and a communications unit, wherein the processing unit can execute a computer instruction, so that the system chip is enabled to perform the data packet processing method according to any one of claims 1 to 21.
